Europäisches Patentamt

European Patent Office

Office européen des brevets

(19)

(11) **EP 1 155 282 B1**

(12) **FASCICULE DE BREVET EUROPEEN**

(45) Date de publication et mention
de la délivrance du brevet:
**28.12.2005 Bulletin 2005/52**

(21) Numéro de dépôt: **00906413.0**

(22) Date de dépôt: **17.02.2000**

(51) Int Cl.$^7$: **G01B 3/38**

(86) Numéro de dépôt international:
**PCT/FR2000/000395**

(87) Numéro de publication internationale:
**WO 2000/050840 (31.08.2000 Gazette 2000/35)**

(54) **PROCEDE DE CONTROLE D'UN FILETAGE CONIQUE ET DISPOSITIFS DE CONTROLE CORRESPONDANTS**

VERFAHREN ZUR KONTROLLE EINES KONISCHEN GEWINDES UND ENTSPRECHENDE KONTROLLVORRICHTUNGEN

METHOD FOR CONTROLLING TAPERED PIPE THREAD AND CORRESPONDING CONTROL DEVICES

(84) Etats contractants désignés:
**AT BE CH CY DE DK ES FI FR GB GR IE IT LI LU MC NL PT SE**
Etats d'extension désignés:
**RO**

(30) Priorité: **24.02.1999 FR 9902526**

(43) Date de publication de la demande:
**21.11.2001 Bulletin 2001/47**

(73) Titulaires:
• **VALLOUREC MANNESMANN OIL & GAS FRANCE**
**59620 Aulnoye-Aymeries (FR)**
• **SUMITOMO METAL INDUSTRIES, LTD.**
**Osaka-shi, Osaka 541-0041 (JP)**

(72) Inventeurs:
• **NOEL, Thierry**
**F-59990 Sebourg (FR)**
• **ASSENS, Gilles**
**F-68000 Colmar (FR)**

(74) Mandataire: **Pellicani, Félix Angelo et al**
**SETVAL,130 rue de Silly**
**92100 Boulogne-Billancourt (FR)**

(56) Documents cités:
**EP-A- 0 488 912      FR-A- 2 426 240**
**US-A- 4 330 944      US-A- 4 524 524**
**US-A- 4 567 670      US-A- 4 947 555**
**US-A- 4 965 937      US-A- 5 048 197**
**US-A- 5 182 862      US-A- 5 276 971**
**US-A- 5 360 239**

**Description**

La présente invention concerne un procédé de contrôle dimensionnel d'un filetage conique mâle ou femelle disposé sur la périphérie d'un élément tubulaire mâle ou femelle lui même situé en extrémité d'un tube métallique et plus particulièrement un procédé de contrôle dimensionnel du diamètre primitif d'un tel filetage conique mâle ou femelle dans un plan de section droite donné et des dispositifs de contrôle pour mettre en oeuvre le procédé.

Par diamètre primitif d'un filetage, on entend le diamètre pris sur flanc de filet mâle à mi-hauteur de filet. Le filetage femelle est défini par rapport au filetage mâle.

Dans le cas d'un filetage conique, la valeur nominale du diamètre primitif doit être définie dans un plan de section droite donné.

On connaît des assemblages filetés de tubes métalliques, notamment utilisés pour constituer des colonnes de tubes de forage, de production ou de cuvelage pour des puits d'hydrocarbures ou des puits de mine, l'assemblage se faisant entre un élément mâle et un élément femelle situés en extrémité des tubes et munis chacun d'un filetage conique respectivement mâle et femelle disposé sur la surface périphérique respectivement extérieure et intérieure de l'élément mâle ou femelle.

Par tube, on entend ici tout type de tube, non seulement un tube de grande longueur mais aussi un élément tubulaire de faible longueur formant par exemple manchon et permettant d'associer deux tubes de grande longueur.

La spécification API 5CT de l'American Petroleum Institute (API) qui constitue un standard mondial dans l'industrie d'extraction des hydrocarbures spécifie ainsi des tubes assemblés au moyen de tels assemblages filetés comportant des filetages coniques à filets triangulaires, ronds ou trapézoïdaux.

La spécification API 5B, également émise par l'American Petroleum Institute, spécifie, quant à elle, les filetages correspondants et la manière de les contrôler.

La spécification API 5B mentionne notamment pour chaque dimension de tube la valeur du diamètre primitif nominal des filetages dans un plan de section droite situé à l'extrémité des filets mâles parfaits du côté corps du tube, les filets mâles au-delà de ce plan ayant une hauteur incomplète et allant en s'évanouissant.

Dans la suite du présent document, ce plan est appelé le plan de référence du diamètre primitif ou en abrégé " plan de référence " . Le terme " premier filet " se rapporte au côté du filetage dirigé vers l'extrémité libre de l'élément mâle ou femelle correspondant ; le terme " dernier filet " se rapporte au côté du filetage dirigé à l'opposé de l'extrémité libre de l'élément correspondant.

Le dernier filet mâle parfait se situe ainsi dans le plan de référence alors que le dernier filet mâle correspond à l'extrémité du filetage du côté corps du tube.

Les filetages réalisés selon spécification API 5B doivent être contrôlés par vissage à la main de calibres tels que des bagues-calibres comportant un filetage intérieur dans le cas du contrôle de filetages mâles ou des tampons-calibres comportant un filetage extérieur dans le cas du contrôle de filetages femelles.

On contrôle en fait la position axiale relative de fin de vissage du calibre par rapport au filetage contrôlé et la spécification API 5B définit une valeur et une tolérance sur cette position axiale relative.

Le procédé de contrôle spécifié par l'API 5B présente des avantages, à savoir notamment de permettre un contrôle global simple et rapide du filetage mais présente aussi par contre un certain nombre d'inconvénients tant économiques que techniques.

Tout d'abord, le procédé de contrôle par calibres massifs nécessite pour chacun des diamètres de filetage à contrôler des jeux de calibres de niveaux différents, à savoir des calibres primaires et des calibres secondaires ou de travail, les calibres de travail devant être mis au rebut lorsque leur usure dépasse un niveau critique.

Il s'ensuit un nombre extrêmement élevé de calibres à réaliser avec grande précision et à gérer en fonction de leur état d'usure, donc un coût d'usage important.

Ensuite, ce procédé de contrôle du filetage fournit un résultat global qui est fonction de plusieurs paramètres parmi lesquels le diamètre primitif mais aussi la conicité, l'ovalisation, paramètres qui interagissent et ne facilitent donc pas l'interprétation fine des résultats de contrôle.

Ainsi, dans le cas du contrôle d'un filetage mâle, si la conicité du filetage mâle à contrôler est inférieure à celle du calibre, les premiers fonds de filets mâles sont en contact avec les filets du calibre alors que les derniers fonds de filets mâles présentent un jeu radial par rapport aux filets correspondants du calibre. Si par contre la conicité du filetage mâle à contrôler est supérieure à celle du calibre, les fonds des derniers filets mâles sont en contact avec les filets du calibre mais pas les fonds des premiers.

Dans les deux cas, le diamètre primitif du filetage mâle dans le plan correspondant sur le calibre au plan de référence est inférieur au diamètre primitif nominal mais, en plus dans le deuxième cas, le diamètre primitif au niveau des premiers filets mâles est mal connu.

De même, dans le cas du contrôle d'un filetage femelle, que la conicité du filetage femelle à contrôler soit inférieure ou supérieure à celle du calibre, le diamètre primitif du filetage femelle dans le plan correspondant sur le calibre au plan de référence est supérieur au diamètre primitif nominal mais, si elle est inférieure, le diamètre primitif au niveau des premiers filets mâles est mal connu.

Les fabricants d'assemblages filetés particuliers, tels que par exemple d'assemblages décrits dans le brevet EP 0 488 912 qui sont conçus pour tenir des performances en service supérieures à celles des assemblages selon API, ont été amenés, du fait de la reconnaissance et de l'imposition internationale des spécifications API, à utiliser des procédures de contrôle semblables à celles spécifiées pour les assemblages selon API.

Le coût de mise en oeuvre de ces procédures est considérable, le fabricant devant disposer de chaînes complètes de jeux de calibres pour lui-même et pour ses sous-traitants.

Des procédés de contrôle de filetage ont été de ce fait développés qui n'utilisent pas de calibres massifs mais qui effectuent une détermination directe du diamètre primitif dans le plan de référence ou à un autre endroit défini.

Le brevet US 4,524,524 décrit ainsi un procédé et un appareillage de contrôle direct du diamètre primitif d'un filetage mâle ou femelle disposé horizontalement dans lequel:

- l'appareillage comporte une surface de contact supérieure et une surface de contact inférieure situées dans un plan vertical à distance horizontale réglable d'une surface verticale d'appui ;
- on règle la distance verticale entre les surfaces de contact supérieure et inférieure sur une valeur préétablie ;
- on place l'appareillage de manière à ce que la surface verticale d'appui repose contre l'extrémité de l'élément dont on veut contrôler le filetage et à ce que les deux surfaces de contact soient en contact avec les sommets de filets en des points diamétralement opposés du filetage ;
- on mesure l'écart de distance entre ces deux surfaces de contact par rapport à la valeur préétablie à l'aide, par exemple, d'un comparateur dont le zéro a été fait sur la valeur préétablie.

La valeur préétablie correspond dans ce cas à la valeur nominale du diamètre entre sommets de filet donc à la valeur nominale du diamètre primitif augmentée ou diminuée d'une hauteur de filet selon qu'il s'agit d'un filetage mâle ou femelle.

La notice de l'appareillage commercialisé par le titulaire du brevet US 4,524,524 précise :

a) la relation nécessaire pour rattacher la tolérance sur le diamètre primitif ($\Delta$D) selon le procédé de contrôle par la mesure du diamètre primitif à la tolérance de positionnement axial ($\Delta$S) calibre massif définie par la spécification API 5B :

$$\Delta D = \Delta S.TT_{nom}/100$$

$TT_{nom}$ étant la conicité nominale du filetage en % rapportée au diamètre ;

b) des corrections fines pour tenir compte de l'influence de la géométrie des surfaces de contact de l'appareillage de contrôle sur la valeur préétablie de la distance verticale entre les surfaces de contact ;

c) la manière de déterminer la valeur préétablie de la distance verticale entre les surfaces de contact de l'appareillage de contrôle pour tenir compte d'une localisation du plan de mesure en dehors du plan de référence. On soustrait alors au diamètre primitif nominal une quantité égale à : $L..TT_{nom}/100$,

L étant la distance axiale entre plan de mesure et plan de référence et $TT_{nom}$ étant la valeur nominale de la conicité du filetage exprimée en % et rapportée au diamètre.

La notice de cet appareillage ne mentionne cependant aucun intérêt particulier de réaliser le contrôle dimensionnel du diamètre primitif dans un plan de mesure autre que le plan de référence.

Il en est de même pour l'appareil décrit dans les brevets US 4 567 670 et US 4 965 937.

On a cherché dans un premier aspect de la présente invention à développer un procédé de contrôle d'un filetage conique mâle ou femelle plus spécialement adapté aux assemblages à hautes performances d'étanchéité dont les éléments mâle et femelle comprennent au moins un moyen d'étanchéité, qui ne mette pas en oeuvre de calibre massif mais qui permette d'obtenir voire de garantir les mêmes performances que le procédé de contrôle par calibre massif.

On a ainsi cherché à utiliser un procédé dans lequel on contrôle le diamètre primitif dans un plan de mesure donné au moyen d'un appareil de mesure plan de diamètre.

On entend dans la suite du présent document par appareil de mesure plan de diamètre et, en abrégé, appareil de mesure un appareil semblable ou équivalent à celui décrit dans le brevet US 4,524,524 qui permet de mesurer un diamètre dans un plan de section droite donné d'un objet à contrôler et qui comprend :

- une surface d'appui transversale,
- au moins deux surfaces de contact définies par rapport au plan de mesure et transversalement à distance l'une de l'autre et à distance axiale réglable de la surface d'appui,

- et un moyen de mesure du diamètre du cercle situé dans un plan transversal de mesure à distance axiale donnée de la surface d'appui et tangent aux surfaces de contact.

On a en outre cherché à effectuer la mesure du diamètre primitif dans le plan de section droite où il est le plus important de l'effectuer compte tenu des caractéristiques attendues d'étanchéité des assemblages à contrôler.

En effet, un inconvénient de l'utilisation d'un appareil de mesure plan de diamètre est que l'on ne connaît précisément le diamètre primitif du filetage à contrôler qu'au voisinage du plan de mesure, la valeur du diamètre primitif dans un plan relativement éloigné du plan de mesure étant empreinte d'incertitude compte tenu des tolérances de fabrication sur la conicité du filetage à contrôler.

Le brevet US 5 360 239 décrit une méthode de contrôle mettant en oeuvre un appareil de mesure plan de diamètre, le diamètre primitif étant mesuré au voisinage des premiers filets parfaits mâles et sur les filets femelles correspondants.

Une telle méthode permet de garantir une valeur élevée d'interférence entre premiers filets parfaits mâles et filets femelles correspondants dans le cas de joints filetés de gros diamètre non munis de moyens séparés d'étanchéité dans le but d'obtenir des joints filetés suffisamment étanches malgré les pressions et les efforts mis en jeu.

Ce brevet US 5 360 239 ne décrit toutefois pas la manière de déterminer la valeur attendue du diamètre primitif dans le plan de mesure ou les bornes admissibles de ce diamètre et ne cherche pas à obtenir une distribution particulière des diamètres mesurés par rapport à la distribution obtenue par contrôle conventionnel à l'aide de calibres massifs.

Le procédé selon l'invention de contrôle d'un filetage conique mâle ou femelle disposé sur la périphérie extérieure ou intérieure d'un élément tubulaire mâle ou femelle lui-même situé en extrémité d'un tube métallique et comprenant au moins un moyen d'étanchéité, est un procédé dans lequel on contrôle le diamètre primitif du filetage dans un plan de mesure donné situé à la distance L du plan de référence du dessin au moyen d'un appareil de mesure plan de diamètre muni d'un moyen de mesure de diamètre.

Par moyen d'étanchéité, on entend dans le présent document un moyen tel que, par exemple, une portée d'étanchéité, une surface d'appui transversale ou un moyen équivalent.

Le ou les moyens d'étanchéité mâles sont situés au voisinage de l'extrémité libre de l'élément mâle alors que le ou les moyens d'étanchéité femelles sont disposés sur l'élément femelle de sorte à coopérer avec celui ou ceux situés au voisinage de l'extrémité libre de l'élément mâle auquel l'élément femelle est destiné à être assemblé.

Le procédé comprend les étapes suivantes :

a) une étape d'ajustage sur ledit appareil de mesure plan de diamètre de la distance entre la surface d'appui et le plan de mesure, cette distance étant fonction de la distance entre plan de mesure et plan de référence,

b) une étape de réglage dudit moyen de mesure sur une valeur de la distance transversale entre les surfaces de contact au moyen d'un bloc étalon dont la cote caractéristique est définie par rapport à la valeur estimée du diamètre primitif dans le plan de mesure. La cote caractéristique est respectivement supérieure ou inférieure suivant que l'on contrôle un filetage mâle ou femelle à la valeur estimée du diamètre primitif dans le plan de mesure d'une quantité h ; cette quantité h est égale à la somme de la hauteur d'un filet et d'un facteur de correction géométrique connu en soi,

c) une étape de mesure du diamètre entre sommets de filets du filetage dans le plan de mesure choisi, ledit appareil de mesure étant mis en butée par sa surface d'appui contre l'extrémité libre de l'élément considéré,

d) une étape de comparaison du diamètre mesuré entre sommets de filets par rapport aux bornes de l'intervalle admissible.

Le plan de mesure du diamètre primitif du filetage mâle est un plan situé entre le plan de référence et le premier filet mâle parfait. Le choix du plan de mesure doit bien sûr permettre aux surfaces de contact de l'appareil de mesure de pouvoir être appliquées sur une longueur suffisante de sommets de filets parfaits.

Préférentiellement, le plan de mesure du diamètre primitif du filetage mâle est le plan situé sensiblement à mi-distance axiale entre le plan de référence et celui correspondant au premier filet mâle parfait.

Le plan de mesure du diamètre primitif du filetage conique femelle est le plan du dessin qui coïncide avec le plan de mesure du diamètre primitif du filetage mâle lorsque les deux filetages mâle et femelle sont assemblés sur le dessin.

En variante, si le plan du dessin coïncidant avec le plan de mesure du diamètre primitif du filetage mâle ne tombe pas dans une zone de filets femelles parfaits, le plan de mesure du diamètre primitif du filetage conique femelle est le plan de section droite situé dans la zone de filets femelles parfaits le plus proche dudit plan coïncidant.

La valeur estimée $D1_e$ du diamètre primitif du filetage mâle dans le plan de mesure est obtenue par les formules suivantes, toutes les valeurs de conicité dans la suite du présent document étant rapportées au diamètre et

exprimées en % :

$$D1e = Dnom - L1 \cdot TTrep1/100$$

$$TTrep1 = TTnom + K1 \cdot \Delta TT1 + \frac{K1 \cdot \sigma1}{\sqrt{2\pi}} \cdot \exp\left[-\frac{1}{2} \cdot (\Delta TT1 / \sigma1)^2\right]$$
$$-K1 \cdot \Delta TT1 \cdot g(-\Delta TT1 / \sigma1)$$

La valeur estimée D2$_e$ du diamètre primitif du filetage femelle dans le plan de mesure est obtenue par les formules suivantes :

$$D2e = Dnom - L2 \cdot TTrep2/100$$

$$TTrep2 = TTnom + K2 \cdot \Delta TT2 - \frac{K2 \cdot \sigma2}{\sqrt{2\pi}} \cdot \exp\left[-\frac{1}{2} \cdot (\Delta TT2 / \sigma2)^2\right]$$
$$-K2 \cdot \Delta TT2 \cdot g(\Delta TT2 / \sigma2)$$

Les indices 1 et 2 dans les équations sont relatifs respectivement aux filetages mâle et femelle.

$D_{nom}$ est la valeur nominale du diamètre primitif dans le plan de référence,

$TT_{rep}$ est la valeur de report de la conicité ;

L est la distance entre le plan de mesure et le plan de référence comptée positivement lorsque le plan de mesure est situé du côté des faibles diamètres par rapport au plan de référence ;

$TT_{nom}$ est la valeur nominale de la conicité du filetage ;

$\Delta TT$ est la valeur algébrique de l'écart ($TT_{moy}$- $TT_{nom}$) ;

$TT_{min}$, $TT_{max}$ et $TT_{moy}$ sont respectivement les valeurs minimale, maximale et moyenne de la conicité des filetages réalisés ;

$\sigma$ est l'écart-type de la distribution des valeurs de conicité réalisées ;

K1 est le rapport de la longueur du filetage mâle à la distance entre le plan de référence (P0) et le premier filet mâle parfait et K2 est le rapport de la longueur du filetage femelle à la distance entre le plan de référence (P0) et le dernier filet femelle parfait ;

g(x) est la valeur de la loi normale centrée réduite pour la valeur x de la variable.

La valeur de la conicité de report $TT_{rep}$ définie par son équation correspond à la conicité d'un cône fictif dont le grand diamètre égal à la valeur nominale du diamètre primitif est positionné dans le plan de référence et dont le petit diamètre égal à la valeur moyenne des diamètres primitifs des filetages contrôlés au moyen de calibres massifs est positionné dans le plan situé à l'extrémité des filets des filetages contrôlés du côté du ou des moyens d'étanchéité.

La présente invention résout le problème concernant le lieu où il est le plus important d'effectuer la mesure du diamètre primitif du filetage à contrôler pour optimiser les caractéristiques d'étanchéité de l'assemblage fileté.

En effet, il est apparu aux inventeurs lors de la mise au point de l'invention qu'une trop grande interférence diamétrale en filetage dans la zone des premiers filets parfaits mâles avait une influence néfaste sur l'étanchéité de l'assemblage, notamment lorsqu'une portée d'étanchéité métallique est prévue entre le filetage mâle et l'extrémité de l'élément mâle pour interférer radialement avec une portée d'étanchéité métallique disposée sur l'élément femelle.

L'interférence diamétrale entre les points conjugués de deux surfaces de révolution qui interfèrent radialement est définie de manière générale comme la différence de diamètre de section droite des surfaces en ces points, différence mesurée avant l'assemblage et comptée positivement lorsque les deux surfaces une fois assemblées exercent une pression de contact entre les points conjugués. Cette définition peut s'appliquer aussi bien à des filetages interférents qu'à des portées d'étanchéité.

Pour estimer la valeur de l'interférence diamétrale dans les filets proches des premiers filets parfaits mâles, il est nécessaire d'effectuer une mesure du diamètre primitif plus près de cette zone plutôt que vers les derniers filets parfaits mâles pour ne pas introduire une incertitude importante due à la variabilité de la conicité : un tel objectif est bien pris en compte par la présente invention.

La présente invention permet ainsi de garantir que la valeur moyenne des diamètres primitifs des filetages contrôlés par le procédé selon la présente invention dans le plan des filets voisins du ou des moyens d'étanchéité sera la même que l'on effectue le contrôle par le procédé selon la présente invention ou au moyen de calibres massifs comme le spécifie l'API 5B, même si le plan de mesure n'est pas situé tout à fait à l'extrémité du filetage.

Préférentiellement, la valeur moyenne de la conicité du filetage femelle est inférieure à la valeur moyenne de la conicité du filetage mâle qui lui est associé.

Un tel démariage conduit à favoriser la réalisation d'assemblages dont l'interférence entre filetages est réduite à proximité du ou des moyens d'étanchéité, la valeur de l'interférence diamétrale en filetage à ce niveau étant appréciée de façon optimale par le procédé de contrôle selon l'invention.

Préférentiellement, la valeur moyenne de la conicité du filetage mâle est supérieure à la valeur nominale.

En variante, la valeur moyenne de la conicité du filetage femelle est inférieure à la valeur nominale.

Les valeurs minimales et maximales admissibles du diamètre mesuré entre sommets de filets peuvent être définies directement à partir des valeurs minimales et maximales admissibles relatives au diamètre primitif dans le plan de mesure considéré augmentées ou diminuées de la hauteur d'un filet selon que l'on contrôle un filetage mâle ou femelle.

Les valeurs minimales et maximales admissibles du diamètre primitif peuvent être définies directement par des tolérances sur la valeur estimée du diamètre primitif $D1_e$ ou $D2_e$ ou encore en remplaçant dans la formule donnant la valeur estimée du diamètre primitif dans le plan de mesure la valeur de la distance entre plan de référence et plan de mesure par des valeurs minimales et maximales admissibles de cette distance.

Préférentiellement, lors de l'étape de réglage du moyen de mesure, on effectue un zéro du moyen de mesure, puis lors de l'étape de mesure, on mesure un écart par rapport au zéro et enfin, lors de l'étape de comparaison, on effectue la comparaison de l'écart par rapport à un intervalle de tolérance.

Avantageusement lorsque l'appareil de mesure dispose de deux surfaces de contact, le procédé de contrôle est mis en oeuvre quatre fois dans le même plan de mesure en tournant l'appareil de mesure ou le filetage à contrôler d'un huitième de tour entre chaque mesure autour de l'axe de l'assemblage, le diamètre entre sommets de filets dans le plan de mesure considéré étant pris égal à la valeur moyenne des quatre mesures.

En variante lorsque l'appareil de mesure comporte trois surfaces de contact disposées à 120° l'une de l'autre, le procédé de contrôle est mis en oeuvre trois fois en tournant l'appareil de mesure ou le filetage de 40° soit un neuvième de tour autour de l'axe de l'assemblage entre chaque mesure.

On a cherché dans un deuxième aspect de l'invention à inventer un appareil de mesure plan de diamètre qui permette de mettre en oeuvre le procédé selon l'invention de manière rapide, donc économique.

Lorsque l'appareil de mesure comprend deux surfaces de contact, il est nécessaire de faire pivoter ledit appareil autour d'une des deux surfaces de contact pour détecter le point du filetage à contrôler diamétralement opposé du point où est appliquée la surface de contact pivot, le diamètre entre sommets de filets correspondant à un maximum dans la mesure réalisée durant ce pivotement. Ledit appareil de mesure comprend alors un moyen pour acquérir automatiquement ce maximum.

On a aussi cherché à ce que le procédé de contrôle selon l'invention permette de réagir rapidement en cas de dérive des fabrications.

Dans ce but, ledit appareil de mesure comprend un moyen pour effectuer des calculs statistiques sur les valeurs acquises.

Un troisième aspect de l'invention concerne un bloc étalon utilisé pour ajuster la valeur préétablie de la distance entre les surfaces de contact dans le procédé de contrôle selon le premier aspect de l'invention.

Dans le cas du contrôle de filetages coniques mâles, le bloc étalon utilisé avec un appareil de mesure à deux surfaces de contact est, selon ce troisième aspect, en forme de coin tronqué qui comprend :

- une surface transversale d'extrémité et
- deux faces planes, d'orientation sensiblement longitudinale, inclinées symétriquement par rapport à la surface transversale d'extrémité et convergeant vers celle-ci,
- l'angle entre lesdites faces planes inclinées étant égal à $2.\mathrm{arctg}\,(TT_{moy1}/2)$ et
- la distance transversale entre lesdites faces planes inclinées étant égale à $(D1_e +h)$ à la distance longitudinale $L_A$ de la surface d'extrémité si h est la quantité précédemment définie.

En variante, le bloc étalon utilisé avec un appareil de mesure à trois surfaces de contact est en forme de tronc de cône et comprend une surface transversale d'extrémité du côté du sommet du cône et une surface périphérique conique de conicité égale à $TT_{moy1}$, le diamètre de la surface conique à la distance $L_A$ de la surface transversale d'extrémité étant égal à $(D1_e +h)$.

Le bloc étalon peut en outre comporter à l'extrémité de ses faces planes inclinées ou de sa surface périphérique conique du côté de la surface d'extrémité une partie de pente ou de conicité différente qui reproduit le profil du ou des moyens d'étanchéité de l'élément mâle. Un tel bloc étalon permet de régler un second appareil de mesure plan de diamètre pour notamment effectuer le contrôle du diamètre de la portée d'étanchéité.

Dans le cas du contrôle de filetages coniques femelles, le bloc utilisé avec un appareil de mesure à deux surfaces de contact présente selon ce troisième aspect une surface d'extrémité transversale et un espace intérieur délimité par deux faces planes du bloc, d'orientation sensiblement longitudinale, inclinées symétriquement par rapport à ladite surface d'extrémité et convergeant vers le fond de l'espace intérieur, l'angle entre lesdites faces planes inclinées étant égal à 2.arctg ($TT_{moy2}/2$) et la distance transversale entre lesdites faces planes inclinées étant égale à ($D2_e$ -h) à la distance longitudinale $L_B$ de la surface d'extrémité si h est la quantité précédemment définie.

En variante pour le contrôle de filetages coniques femelles, le bloc étalon utilisé avec un appareil de mesure à trois surfaces de contact comprend une surface transversale d'extrémité et un espace intérieur délimité par une surface périphérique conique d'axe longitudinal et de conicité égale à $TT_{moy2}$. dont le sommet est dirigé du côté opposé à la surface transversale d'extrémité et dont le diamètre à la distance $L_B$ de la surface transversale d'extrémité est égal à ($D2_e$ -h).

Le bloc étalon pour le contrôle de filetages coniques femelles peut en outre comporter à l'extrémité de ses faces planes inclinées ou de sa surface périphérique conique du côté opposé à la surface d'extrémité transversale une partie de pente ou de conicité différente qui reproduit le profil du ou des moyens d'étanchéité de l'élément femelle. Un tel bloc étalon permet de régler un second appareil de mesure plan de diamètre pour notamment effectuer le contrôle du diamètre de la portée d'étanchéité. L'invention est définie dans les revendications indépendantes 1, 3, 12, 14, 15, 17 et 18. Les modes particuliers de réalisation de l'invention sont définis dans les revendications dépendantes 2, 4 à 11, 13, 16 et 19.

Les figures ci-après illustrent des exemples non limitatifs de modes de réalisation de l'invention.

La figure 1 montre un élément fileté femelle en extrémité de tube.

La figure 2 montre un élément fileté mâle en extrémité de tube.

La figure 3 montre les éléments des figures 1 et 2 une fois assemblés.

La figure 4 illustre schématiquement le contrôle d'un élément femelle par un tampon-calibre selon la spécification API 5B.

La figure 5 illustre schématiquement le contrôle d'un élément mâle par une bague-calibre selon la spécification API.5B

La figure 6 montre le contrôle d'un élément mâle du type de la figure 2 à l'aide d'un appareil de mesure plan de diamètre selon l'invention.

La figure 7 montre un détail de la figure 6 au niveau d'une surface de contact de l'appareil de mesure plan de diamètre.

La figure 8 montre un détail de la figure 6 au niveau d'une autre surface de contact de l'appareil de mesure plan de diamètre.

La figure 9 montre le contrôle d'un élément femelle du type de la figure 1 à l'aide d'un appareil de mesure plan de diamètre selon l'invention.

Les figures 10 à 13 montrent des variantes de blocs étalons pleins à utiliser dans le cas du contrôle de filetages mâles selon la figure 6 alors que les figures 14 à 17 sont relatives à des blocs étalons creux à utiliser dans le cas du contrôle de filetages femelles selon la figure 9.

La figure 18 illustre très schématiquement la relation entre la position du diamètre primitif à une extrémité du filetage mâle pour différentes conicités possibles par rapport à la position du diamètre primitif d'une bague-calibre du genre de la figure 5.

La figure 19 illustre le même type de relation dans le cas d'un filetage femelle par rapport à la position du diamètre primitif d'un tampon-calibre du genre de la figure 4.

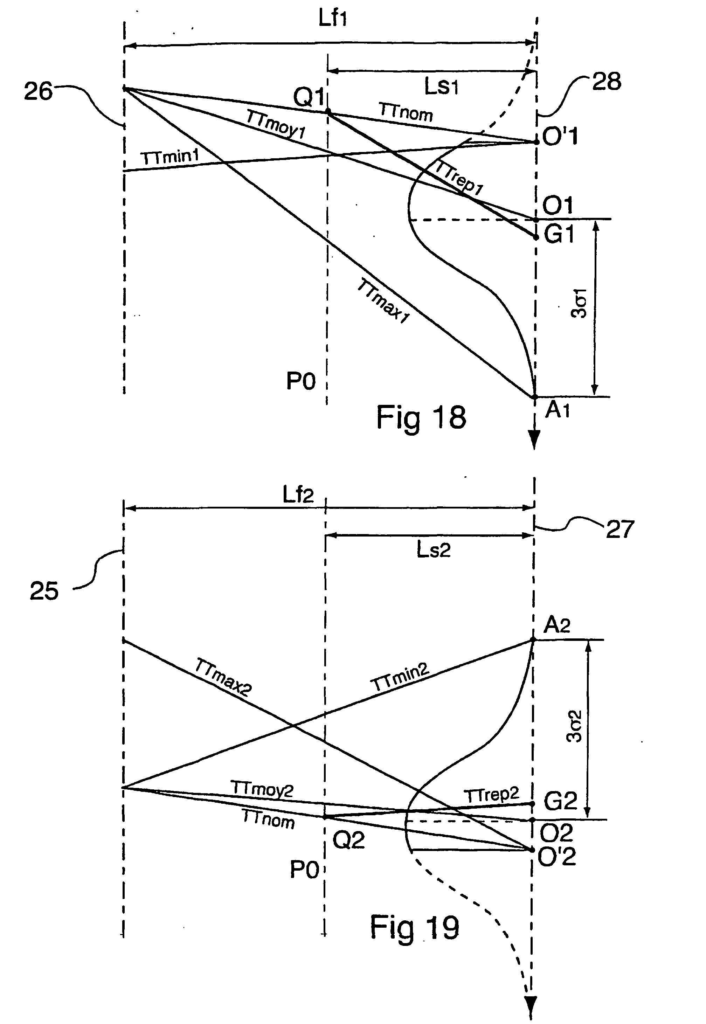

Sur ces figures 18 et 19, les écarts de conicités ont été fortement amplifiés pour montrer plus clairement les distributions des valeurs.

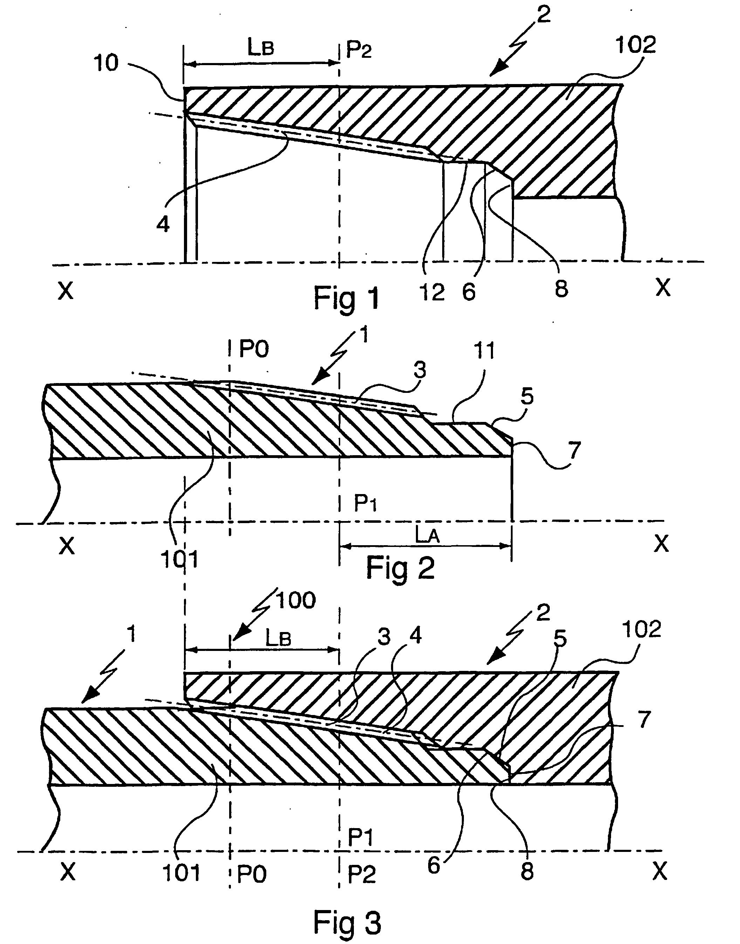

La figure 3 représente un assemblage fileté 100 entre un élément mâle 1 en extrémité d'un premier tube métallique 101 et un élément femelle 2 en extrémité d'un second tube métallique 102 qui peut être un tube de grande longueur ou un manchon. De tels assemblages filetés permettent par exemple de constituer des colonnes de tubes de cuvelage ou de production pour les puits d'hydrocarbures.

L'élément mâle 1 représenté à la figure 2 comporte sur sa surface périphérique extérieure un filetage mâle conique 3 à filets trapézoïdaux et son extrémité qui est aussi l'extrémité du premier tube 101 présente une surface d'extrémité mâle 7 annulaire et transversale.

On a représenté sur la figure 2 le plan P0 qui est, selon la spécification API 5 B, le plan de section droite situé à l'extrémité de la zone de filets mâles parfaits correspondant au dernier filet mâle parfait.

L'élément femelle 2 représenté à la figure 1 comporte sur sa surface périphérique intérieure un filetage femelle conique 4 à filets trapézoïdaux conjugué du filetage mâle 3 et l'extrémité de l'élément femelle 2 qui est aussi l'extrémité du second tube 102 présente une surface d'extrémité femelle 10 annulaire et transversale.

L'assemblage des tubes 101, 102 est obtenu en vissant le filetage mâle 3 de l'élément mâle 1 dans le filetage femelle 4 de l'élément femelle 2.

Préférentiellement pour mettre en oeuvre l'invention, les filetages coniques 3, 4 sont à simple étage.

L'assemblage de la figure 3 comporte sur chacun des éléments des moyens additionnels qui rendent l'assemblage particulièrement étanche, à savoir :

a) sur l'élément mâle :

- une portée d'étanchéité mâle 5 extérieure et conique dont la conicité est en général supérieure à celle du filetage mâle 3 ; la conicité de la portée d'étanchéité mâle 5 rapportée au diamètre est par exemple de 20% ;
- une surface d'appui 7 annulaire et transversale constituée par la surface d'extrémité mâle ;

b) sur l'élément femelle :

- une portée d'étanchéité femelle 6 intérieure et conique dont la conicité est sensiblement identique à celle de la portée d'étanchéité mâle 5,
- un épaulement intérieur avec une surface d'appui 8 annulaire et transversale.

La surface d'extrémité mâle 7 peut être de manière connue en soi conique concave de demi-angle au sommet très ouvert, par exemple 75°, la surface d'appui femelle 8 étant dans ce cas convexe de même demi-angle au sommet.

Les moyens additionnels 5, 6, 7, 8 fonctionnent de la manière suivante sur l'assemblage 100.

La portée d'étanchéité mâle 5 interfère radialement avec la portée d'étanchéité femelle 6, c'est-à-dire que son diamètre en un point de référence est avant assemblage supérieur au diamètre du point conjugué de la portée d'étanchéité femelle 6, diamètre également mesuré avant assemblage.

Au cours du vissage, une fois le contact entre portées d'étanchéité obtenu, la poursuite du vissage induit une interférence diamétrale croissante des portées d'étanchéité.

La position précise de fin d'assemblage est déterminée par la mise en butée de la surface d'extrémité mâle 7 contre la surface d'appui 8 de l'épaulement intérieur femelle, ce qui définit une valeur précise d'interférence entre les portées d'étanchéité 5, 6.

Les surfaces d'appui (7, 8) peuvent aussi jouer un rôle de moyen d'étanchéité bien que leur disposition transversale les rende moins performantes de ce point de vue que les portées d'étanchéité (5, 6).

La position de fin d'assemblage peut notamment être repérée par une valeur donnée du couple de vissage.

La forme avantageusement conique concave-convexe des surfaces d'appui 7, 8 non représentée sur les figures empêche le déboîtement des surfaces d'appui et augmente la pression de contact des portées d'étanchéité 5, 6.

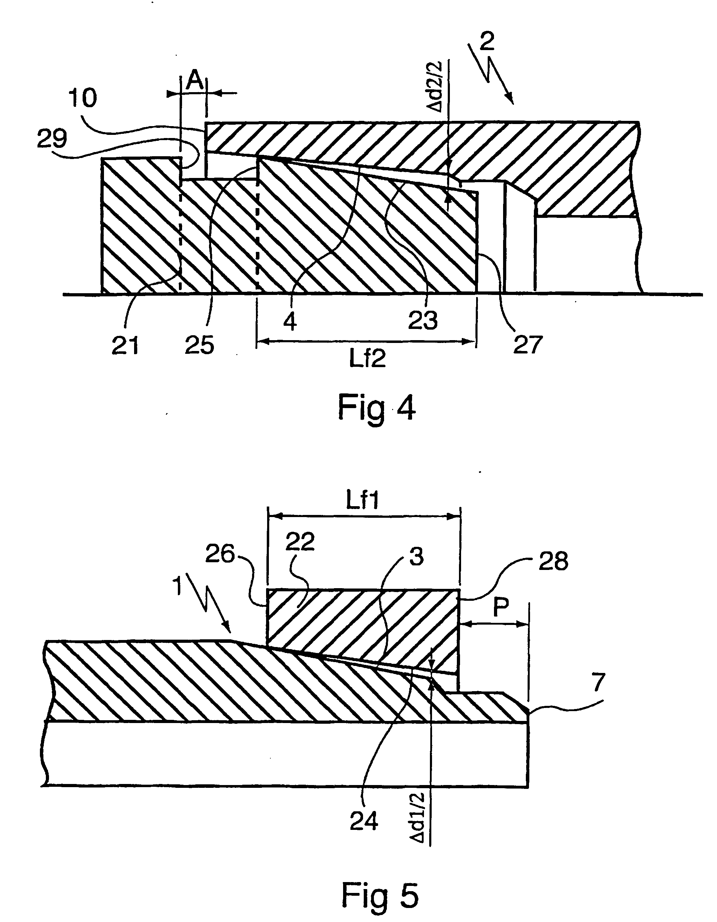

La figure 4 illustre très schématiquement le contrôle du filetage conique femelle 4 d'un élément femelle 2 selon la spécification API 5 B par un tampon-calibre 21 mâle muni d'un filetage conique mâle 23 exécuté selon des tolérances nettement plus resserrées que celles du filetage 4 à contrôler, par exemple dix fois plus resserrées. On peut ainsi considérer que le diamètre primitif du calibre dans le plan de son dernier filet parfait est égal au diamètre primitif nominal et que la conicité du calibre est égale à la conicité du dessin.

Pour simplifier, on n'a représenté à la figure 4 ainsi qu'à la figure 5 que les cônes primitifs des filetages sans faire figurer les cônes des sommets et fonds de filets.

Selon la spécification API 5B, pour contrôler le filetage 4, on visse le tampon-calibre 21 à la main jusqu'à ce qu'à une position de blocage, pour laquelle le diamètre primitif du filetage 23 à une des extrémités 25, 27 du tampon-calibre 21 est égal au diamètre primitif du filetage femelle 4 à contrôler dans un plan donné de celui-ci.

La distance A entre l'extrémité de l'élément femelle 10 et la surface annulaire transversale 29 du tampon-calibre est comparée à la valeur standard S de cette distance pour un couple bague-calibre/tampon-calibre déterminé, le filetage femelle 4 étant jugé acceptable lorsque l'écart de distance par rapport à la valeur standard est compris dans un intervalle de tolérance donné.

Lorsque les filets du tampon-calibre 21 sont en contact avec ceux du filetage femelle 4 à contrôler du côté extrémité 25 du filetage du tampon-calibre 21, ce qui se produit lorsque la conicité du filetage 4 à contrôler est inférieure à la valeur nominale, le diamètre primitif du filetage 4 dans le plan situé à l'extrémité opposée à son entrée est supérieur d'une valeur Δd2 au diamètre primitif du filetage du tampon-calibre 21 dans le plan correspondant.

On peut alors considérer que, pour toutes les valeurs de la conicité du filetage femelle 4 inférieures à la valeur nominale, le cône primitif du filetage 4 pivote autour d'un point situé dans le plan situé à l'extrémité 25 du filetage du tampon-calibre.

Le contraire se produit lorsque la conicité du filetage 4 à contrôler est supérieure à la valeur nominale, le cône primitif du filetage 4 pivotant alors autour d'un point situé dans le plan situé à l'extrémité 27 du filetage du tampon-calibre.

La figure 5 illustre de la même manière le contrôle du filetage conique mâle 3 d'un élément mâle suivant la spécification API 5 B à l'aide d'une bague-calibre 22 munie d'un filetage conique femelle 24 réalisé selon des tolérances très resserrées.

Là encore, on visse la bague-calibre 22 sur le filetage mâle 3 à contrôler jusqu'à une position de blocage qui permet de définir une distance P entre l'extrémité de l'élément mâle 7 et le plan situé à l'extrémité 28 du filetage de la bague-calibre 22.

Lorsque les filets de la bague-calibre 22 sont en contact avec ceux du filetage mâle 3 à contrôler du côté extrémité 26 du filetage de la bague-calibre, ce qui se produit lorsque la conicité du filetage 3 à contrôler est supérieure à la valeur nominale, le diamètre primitif du filetage 3 dans le plan situé à l'entrée dudit filetage est inférieur au diamètre primitif du filetage 24 de la bague-calibre 22 dans le plan correspondant.

On peut alors considérer que, pour toutes les valeurs de la conicité du filetage mâle 3 supérieures à la valeur nominale, le cône primitif du filetage 3 pivote autour d'un point situé à l'extrémité 26 du filetage de la bague-calibre.

Le contraire se produit lorsque la conicité du filetage mâle 3 est inférieure à la valeur nominale, le cône primitif du filetage 3 pivotant alors autour d'un point situé à l'extrémité 28 du filetage de la bague-calibre.

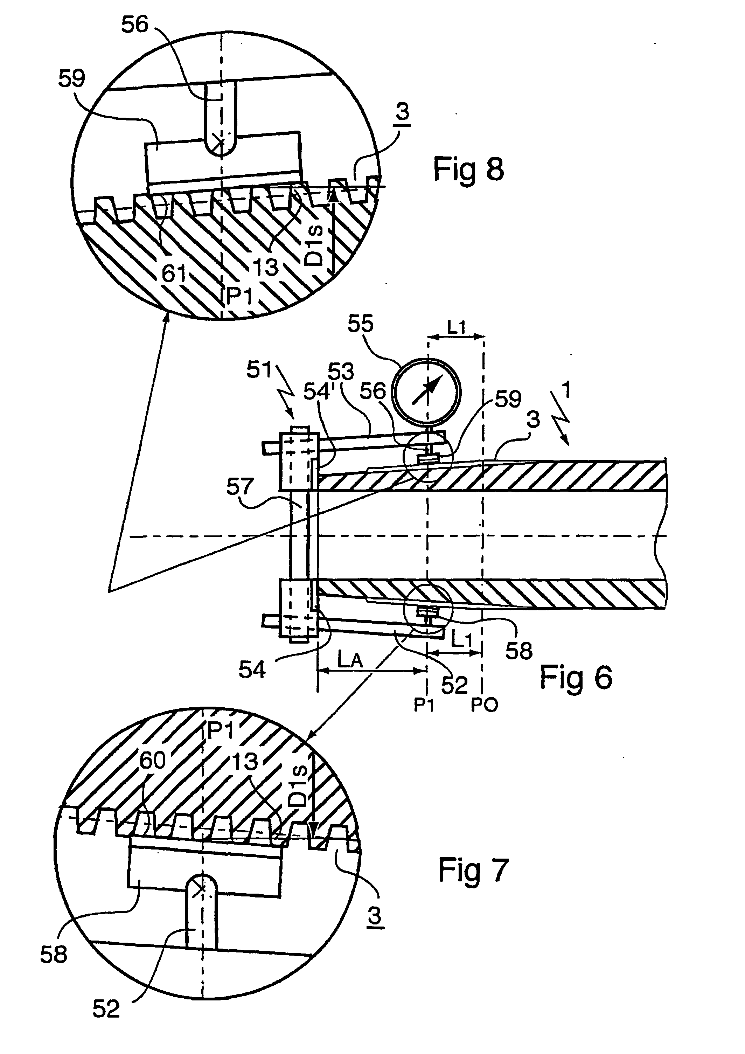

La figure 6 montre schématiquement le contrôle du diamètre primitif d'un filetage conique mâle 3 à l'aide d'un appareil de mesure plan de diamètre 51 du type de celui décrit dans le brevet US 4,524,524.

L'appareil de mesure 51 comprend :

- une traverse de bout 57 qui comprend une surface d'appui transversale formée par les arêtes 54, 54' ;
- deux bras longitudinaux 52, 53 distants transversalement qui sont montés sur la traverse 57 de manière ajustable en fonction du type et du diamètre des filetages à contrôler ;
- deux couteaux 58, 59 disposés longitudinalement, dont les arêtes sont tournées l'une vers l'autre, sont distantes transversalement l'une de l'autre et constituent des surfaces de contact 60, 61, le couteau 58 étant monté sur le bras longitudinal 52 de manière à pouvoir seulement pivoter dans son plan alors que le couteau 59 est monté de la même manière pivotante sur une tige mobile 56 disposée transversalement ;
- un moyen de mesure qui est ici un comparateur 55 disposé sur le bras longitudinal 53 et actionné par la tige mobile 56.

Les axes de pivotement des couteaux définissent un plan de mesure P1, transversal à l'appareil de mesure 51 et parallèle à la surface d'appui 54, 54' ; on peut faire coulisser la traverse 57 pour que le plan de mesure P1 soit situé à une distance donnée $L_A$ de la surface d'appui 54, 54'.

Le comparateur 55 mesure l'écart de distance entre la surface de contact 61 et la surface de contact 60 par rapport à une valeur préétablie de distance correspondant au zéro du comparateur. La mesure du diamètre entre sommets de filet D1s s'obtient alors en ajoutant la valeur algébrique de l'écart mesuré par le comparateur 55 à la valeur préétablie.

Le comparateur 55 peut être avantageusement remplacé par un capteur électronique de déplacement qui permet l'acquisition automatique et l'affichage direct des mesures.

La procédure de contrôle du filetage mâle 3 est la suivante.

On ajuste la distance $L_A$ entre surface d'appui 54, 54' et plan de mesure P1 sur la valeur correspondant sur le dessin de la figure 2 à la distance entre le plan P1 et la surface d'extrémité 7 de l'élément mâle 1. Cette distance $L_A$ est égale à la différence entre la distance de P0 à l'extrémité 7 et la distance L1 entre les plans P0 et P1.

La position du plan de mesure P1 est choisie de manière à ce que les surfaces de contact 60, 61 reposent sur des sommets de filets parfaits, les surfaces de contact 60, 61 ayant une longueur suffisante pour venir en contact avec au moins deux sommets de filet 13.

La position du plan de mesure P1 est préférentiellement choisie comme montré à la figure 2 à mi-distance entre le plan de référence P0 et le plan correspondant au premier filet mâle parfait.

Une telle position permet d'effectuer la mesure du diamètre primitif beaucoup plus près de l'entrée du filetage mâle et donc de mieux apprécier la valeur de l'interférence diamétrale à ce niveau tout en assurant une assise correcte des surfaces de contact 60, 61, même lorsque la zone de filets parfaits est relativement courte.

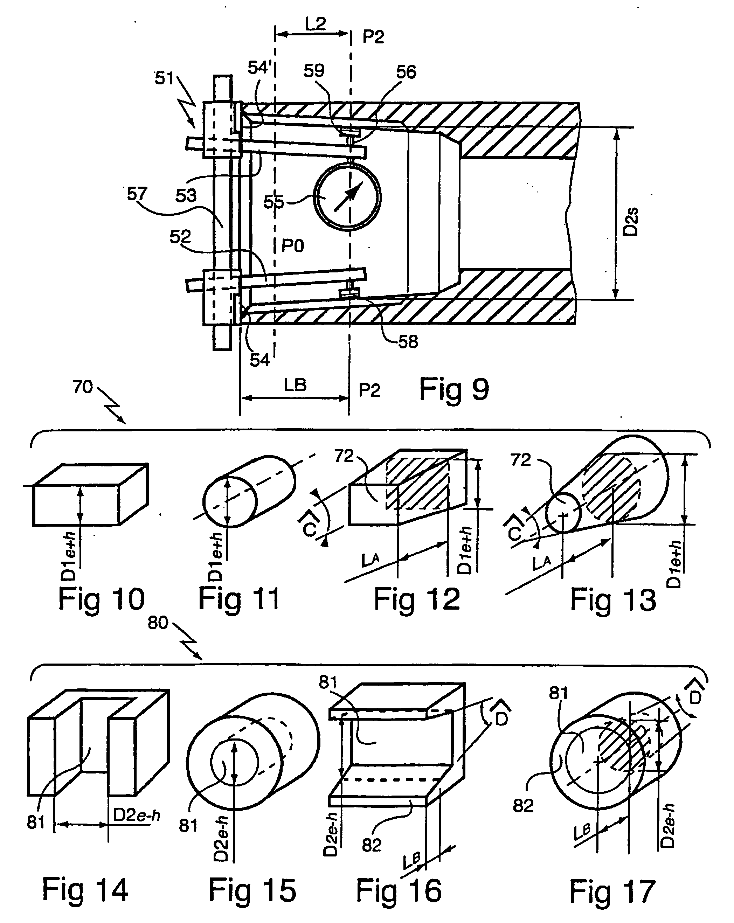

On règle ensuite le zéro du comparateur 55 ou bien on affiche directement la valeur préétablie en interposant entre les surfaces de contact 60, 61 les deux faces planes du bloc étalon 70 de la figure 10, ces faces planes étant distantes entre elles de la valeur $(D1_e + h)$ qui est la cote caractéristique du bloc étalon ; $D1_e$ est la valeur estimée du diamètre primitif du filetage à contrôler dans le plan de mesure ; h est égal à la somme de la hauteur de filet et d'un facteur de correction géométrique donné par le constructeur de l'appareil de mesure 51 ; ce facteur de correction tient compte notamment du fait que les couteaux 58, 59 ne pivotent pas autour des surfaces de contact 60, 61.

Un tel bloc étalon 70 est beaucoup moins coûteux à fabriquer qu'un calibre fileté tel que 22 puisqu'il ne comporte pas de filetage et s'use aussi beaucoup moins vite car il n'est pas soumis à de multiples vissages-dévissages.

Pour déterminer $D1_e$, on utilise la relation suivante :

$$D1_e = D_{nom} - L1.TT_{rep1}/100$$

$D_{nom}$ étant la valeur nominale du diamètre primitif, donc la valeur de cette grandeur dans le plan de référence P0,
L1 étant la distance entre les plans P0 et P1 qui est comptée positivement puisque P1 est du côté des petits diamètres par rapport à P0,
$TT_{rep1}$ étant la valeur de report de la conicité mâle qui sera définie plus loin ; elle est supérieure à la valeur nominale de la conicité.

En variante, pour régler le zéro du comparateur 55, au lieu d'utiliser un bloc étalon présentant deux surfaces planes et parallèles, on peut utiliser le bloc étalon 70 en forme de coin tronqué de la figure 12. Le bloc 70 comprend une surface transversale d'extrémité 72 et deux faces planes d'orientation sensiblement longitudinale, inclinées symétriquement par rapport à la surface transversale d'extrémité et convergeant vers celle-ci ; l'angle C entre les faces planes inclinées est égal à $2.arctg (TT_{moy1}/2)$ et la distance transversale entre les faces planes inclinées est égale à $(D1_e + h)$ à la distance longitudinale $L_A$ de la surface d'extrémité 72. Le bloc étalon 70 est inséré de manière à appliquer sa surface d'extrémité 72 contre la surface d'appui 54, 54' de l'appareil de mesure 51 et ses faces planes inclinées entre les surfaces de contact 60, 61 de l'appareil de mesure 51. On n'a alors besoin que d'un seul bloc étalon 70 quelle que soit la distance L1.

En variante de la figure 12, l'angle C entre les faces planes inclinées est égal à $2.arctg (TT_{rep1}/2)$ et la distance transversale entre les faces planes inclinées est égale à $(D_{nom} + h)$ à la distance longitudinale $(L_A + L1)$ de la surface d'extrémité 72.

Le bloc étalon 70 peut en outre comporter à l'extrémité des faces planes du côté de la surface d'extrémité 72 une partie non représentée à la figure 12 de pente différente qui reproduit le profil du ou des moyens d'étanchéité de l'élément mâle 1, notamment de la portée d'étanchéité 5 et éventuellement de la surface d'extrémité mâle 7. Un tel bloc étalon permet de régler un second appareil de mesure plan de diamètre 51 pour effectuer le contrôle du diamètre de la portée d'étanchéité 5.

Pour effectuer la mesure, on dispose l'appareil de mesure 51 de manière à placer sa surface d'appui 54, 54' contre la surface d'extrémité 7 de l'élément mâle 1 ou contre les points les plus extérieurs de cette surface d'extrémité lorsqu'elle n'est pas plane mais est, par exemple, légèrement conique concave, de demi-angle au sommet 75° et à mettre les surfaces de contact 60, 61 extérieurement en contact avec les sommets 13 de filet mâle diamétralement opposés.

Durant la mesure, la surface de contact 60 est maintenue fixe sur les sommets de filet avec lesquels elle est en contact tandis que l'on fait pivoter l'appareil de mesure 51, la surface de contact 61 restant en contact avec le sommet de filet opposé pendant le pivotement.

La mesure du diamètre D1s entre sommets de filet dans le plan de mesure P1 correspond à la valeur maximale de la distance transversale entre les surfaces de contact 60, 61 pendant le pivotement, valeur maximale qui peut être obtenue par lecture sur le comparateur 55 ou mieux encore automatiquement déterminée si l'on utilise un capteur électronique à la place du comparateur 55 et un circuit électronique qui détecte et mémorise la valeur maximale durant le pivotement de l'appareil de mesure 51 autour de la surface de contact 60.

La dernière étape du procédé de contrôle du filetage mâle 3 est une comparaison entre la valeur D1s mesurée du diamètre entre sommets de filets et les bornes admissibles définies par un intervalle autour de $D1_e$.

La valeur D1 du diamètre primitif mâle dans le plan de mesure P1 s'obtenant en retirant la quantité h précédemment définie à la valeur mesurée D1s du diamètre entre sommets de filets dans le même plan P1, les valeurs des bornes de l'intervalle admissible du diamètre mesuré entre sommets de filets D1s peuvent être définies directement à partir des bornes relatives au diamètre primitif D1, majorées de la quantité h.

Elles peuvent aussi être obtenues indirectement en remplaçant dans la formule $D1_e = D_{nom} - L1.TT_{rep1}/100$

donnant la valeur estimée du diamètre primitif dans le plan de mesure la valeur de la distance L1 entre plan de référence et plan de mesure par des valeurs $L1_{min}$, $L1_{max}$ qui l'encadrent à $\pm\Delta L1$.

La manière d'obtenir $TT_{rep1}$ est définie par le calcul suivant qui est explicité par la figure 18.

D'une façon générale, on a cherché à ce que la valeur moyenne des diamètres primitifs des filetages mâles 3 contrôlés selon la présente méthode soit égale à la valeur moyenne des diamètres primitifs des filetages 3 contrôlés avec une bague-calibre 22 selon la spécification API 5B , ceci dans le plan d'extrémité 28 de cette bague-calibre 22 qui est positionné en moyenne sur le premier filet mâle parfait.

Le point G, marque sur la figure 18 la valeur moyenne du diamètre primitif du filetage 3 dans le plan 28 d'extrémité de la bague-calibre, lequel est distant sur la bague-calibre de Ls1 du plan de référence P0 et de Lf1 du plan 26 situé à l'autre extrémité du filetage de la bague-calibre.

On considérera que :

a) comme indiqué plus haut, les cônes primitifs des filetages réalisés pivotent autour d'un point situé à une extrémité ou à l'autre du filetage de la bague-calibre 22 vissée sur le filetage mâle 3 à contrôler selon que la conicité TT1 du filetage 3 contrôlé est inférieure ou supérieure à la conicité du filetage de la bague-calibre, laquelle est considérée comme égale à la valeur nominale de la conicité.

b) la distribution des conicités des filetages réalisés suit une loi normale centrée sur la valeur moyenne TTmoy 1 de la conicité, l'intervalle entre valeur maximale et valeur minimale des conicités ($TT_{max1}$ -$TT_{min1}$) étant égal à 6 fois l'écart-type $\sigma1$ de la distribution.

Il s'ensuit que si la conicité du filetage contrôlé est supérieure a la valeur nominale $TT_{nom}$, le point du filetage contrôlé dans le plan 28 d'extrémité de la bague-calibre est situé dans l'intervalle $0'_1A_1$, le point 0', correspondant à la conicité $TT_{nom}$ de la bague-calibre et le point A, correspondant à la valeur maximale $TT_{max1}$ de la conicité du filetage à contrôler. La densité de probabilité d'un point quelconque de l'intervalle $O'_1A_1$ suit une loi de Gauss centrée en O, illustrée par la partie en traits pleins de la courbe en cloche représentée à la figure 18, le point O, correspondant à la valeur moyenne $TT_{moy1}$ de la conicité du filetage 3 à contrôler.

Si la conicité TT1 du filetage contrôlé est inférieure à la valeur nominale $TT_{nom}$, l'extrémité du filetage contrôlé dans le plan d'extrémité 28 de la bague-calibre est le point pivot $O'_1$. La probabilité associée à la position du point $O'_1$ est égale à l'aire de la partie en pointillés de la courbe en cloche de la figure 18.

La valeur moyenne résultante de la position de l'extrémité du filetage dans le plan 28 est le centre de gravité G, des positions pour l'ensemble des valeurs de conicité entre $TT_{min1}$ et $TT_{max1}$ et permet de définir une valeur de report de la conicité $TT_{rep1}$ par la pente de la droite $Q_1G_1$, le point Q, correspondant à la valeur nominale du diamètre primitif.

On peut écrire sur un axe dirigé de $O'_1$ vers A, :

$$TT_{rep1} = TT_{nom} + O'_1G_1/Ls1 = TT_{nom} + O'_1O_1/Ls1 + O_1G_1/Ls1$$

$$\frac{O'1\,O1}{Ls1} = \frac{Lf1}{Ls1}.\Delta TT1$$

Le rapport Lf1/Ls1 est encore égal au rapport K1 de la longueur du filetage mâle à la distance entre le plan de référence P0 et le premier filet mâle parfait.

$$\frac{O1G1}{Lf1.\sigma1} = \int_{-\infty}^{+\infty} f(x).\rho(x).dx$$

x est une variable centrée réduite égale à (TT1 -$TT_{moy1}$) /$\sigma1$ qui peut varier de $-\infty$ à $+\infty$, TT1 correspondant à la variable conicité.

$$f(x) \text{ est une fonction de Gauss} = \frac{1}{\sqrt{2\pi}}\exp(-x^2/2)$$

avec

$\rho(x) = x$      pour x > -$\Delta$TT1/$\sigma$1     soit pour TT1 > TT$_{nom}$
$\rho(x) = -\Delta$TT1 /$\sigma$1     pour x $\leq$ -$\Delta$TT1/$\sigma$1     soit pour TT1 $\leq$ TT$_{nom}$

$$\frac{O_1G_1}{Lf_1.\sigma_1} = \int_{-\infty}^{-\Delta TT1/\sigma 1} \frac{-\Delta TT1}{\sqrt{2\pi}.\sigma 1} \exp(-x^2/2).dx + \frac{1}{\sqrt{2\pi}} \int_{-\Delta TT1/\sigma 1}^{+\infty} x.\exp(-x^2/2).dx$$

On peut alors facilement en déduire la formule :

$$TTrep1 = TTnom + K1 \cdot \Delta TT1 + \frac{K1 \cdot \sigma 1}{\sqrt{2\pi}} \cdot \exp\left[-\frac{1}{2} \cdot (\Delta TT1/\sigma 1)^2\right]$$
$$- K1 \cdot \Delta TT1 \cdot g(-\Delta TT1/\sigma 1)$$

Application numérique:

TT$_{nom}$ = 6,25 %     K1 = 2,22
TT$_{min1}$ = 6,10 %     TT$_{max1}$ = 6,60 %     TT$_{moy1}$ = 6,35 %
$\Delta$TT1 = (TT$_{moy1}$ -TT$_{nom}$) = 0, 10 %     $\sigma$1 = (6,60 -6,10)/6 = 0,08 %

On obtient : TT$_{rep1}$ = 6,48 %

Préférentiellement, on cherche à ce que la valeur TT$_{rep1}$ soit comprise dans l'intervalle entre TT$_{nom}$ et TT$_{max1}$, ce qui correspond au cas de la présente application numérique.

Le cône formé par les sommets de filets 13 peut présenter des imperfections géométriques, telles que notamment une ovalisation, des creux et des bosses périodiques selon une section droite.

Il est alors avantageux pour obtenir une mesure représentative du diamètre primitif dans le plan de mesure P1 de réaliser plusieurs mesures du diamètre.

Les inventeurs ont constaté que dans le cas d'un appareil de mesure à deux surfaces de contact 60, 61 du genre de l'appareil 51, il n'est pas nécessaire d'effectuer plus de quatre mesures pour obtenir une valeur représentative du diamètre primitif dans le plan P1.

Il est donc proposé d'effectuer quatre mesures ou déterminations successives du diamètre primitif en tournant l'appareil de mesure 51 ou le filetage 3 à contrôler de 45° soit un huitième de tour autour de l'axe du filetage entre chaque mesure, D1 étant pris égal à la valeur moyenne de ces quatre mesures.

En variante non représentée, l'appareil de mesure plan de diamètre comporte de manière connue en soi trois surfaces de contact distantes de 120° l'une de l'autre qui permettent de définir directement le cercle formé par l'intersection du cône des sommets de filets avec le plan de mesure P1 et, par conséquent, le diamètre entre sommets de filets D1s sans qu'il soit nécessaire de faire pivoter l'appareil autour d'une surface de contact durant la mesure.

Le bloc étalon 70 possède alors comme indiqué à la figure 11 une forme cylindrique de diamètre D1s.

En variante selon la figure 13, il possède une forme tronconique de diamètre égal à: (D$_{1e}$ +h) dans un plan de section droite situé à la distance longitudinale L$_A$ de la surface transversale d'extrémité 72 de petit diamètre du tronc de cône ; sa conicité est égale à la valeur TT$_{moy1}$, le bloc étalon 70 conique étant inséré de manière à appliquer sa surface d'extrémité 72 de petit diamètre contre la surface d'appui 54, 54' de l'appareil de mesure 51 et sa surface périphérique conique entre les surfaces de contact de l'appareil de mesure 51. On n'a alors besoin que d'un bloc étalon quelle que soit la longueur L$_A$ comme dans le cas de la figure 12.

En variante de la figure 13, le bloc étalon 70 a un diamètre égal à: (D$_{nom}$ +h) dans un plan de section droite situé à la distance longitudinale (L$_A$ + L1) de la surface transversale d'extrémité 72 de petit diamètre du tronc de cône ; sa conicité est égale à la valeur TT$_{rep1}$,

En variante non représentée de la figure 13, le bloc étalon 70 peut en outre comporter à l'extrémité de sa surface périphérique conique du côté de la surface d'extrémité 72 une partie non représentée à la figure 12 de conicité différente qui reproduit le profil de l'extrémité de l'élément mâle 1, notamment de la portée d'étanchéité 5 et éventuellement de la surface d'extrémité mâle 7. Un tel bloc étalon permet de régler un second appareil de mesure plan de diamètre 51 pour effectuer le contrôle du diamètre de la portée d'étanchéité 5.

Avec un appareil de mesure à trois surfaces de contact, les inventeurs ont constaté qu'il suffisait d'effectuer trois mesures du diamètre primitif en faisant tournant l'appareil de mesure ou le filetage 3 à contrôler de 40° soit un neuvième de tour autour de l'axe du filetage entre chaque mesure et de prendre la valeur moyenne de ces trois mesures pour obtenir une valeur représentative de D1 dans le plan de mesure P1.

Les figures 9 et 19 font le pendant des figures 6 et 18 pour illustrer et expliciter le contrôle du diamètre primitif D2 d'un filetage conique femelle 4 dans le plan de mesure P2 à l'aide d'un appareil de mesure plan de diamètre 51.

L'appareil de mesure 51 de la figure 9 est sensiblement identique à celui de la figure 6 sauf que, s'agissant de contrôler un filetage femelle, les bras longitudinaux 52, 53 sont pivotés de 180° pour que les surfaces de contact 60, 61 soient dirigées à l'opposé l'une de l'autre.

Le procédé de contrôle comporte les mêmes étapes que celui relatif à un filetage mâle avec toutefois certaines différences qui vont être exposées.

On ajuste tout d'abord sur l'appareil de mesure 51 la distance $L_B$ entre la surface d'appui 54, 54' et le plan de mesure P2.

La position du plan de mesure P2 a été choisie sur la figure 3 de manière à être située dans une zone de filets parfaits femelles et être la plus voisine du plan du dessin qui coïncide avec le plan de mesure P1 du filetage mâle lorsque, sur le dessin, les filetages mâle et femelle sont assemblés.

La figure 3 montre un tel cas où le plan P2 coïncide avec le plan P1 sur le dessin de l'assemblage. La distance $L_B$ correspond alors sur la figure 3 à la distance entre le plan P2 et la surface 10 d'extrémité de l'élément femelle 2.

On règle le zéro du comparateur 55 en plaçant les surfaces de contact 60, 61 sur les deux faces planes, parallèles et en regard l'une de l'autre des branches d'un bloc étalon 80 en forme de U de la figure 14, les deux faces planes délimitant un espace intérieur 81 de largeur égale à ($D2_e$ -h). Dans cette formule, $D2_e$ est la valeur estimée du diamètre primitif dans le plan de mesure P2 et h représente la somme de la hauteur d'un filet et d'un facteur de correction géométrique propre à l'appareil de mesure 51 et connu en soi comme indiqué plus haut.

Pour déterminer $D2_e$, on utilise une relation semblable à celle pour le filetage mâle:

$$D2_e = D_{nom} - L2.TT_{rep2}/100$$

$D_{nom}$ étant la valeur nominale du diamètre primitif,

L2 étant la distance entre les plans P0 et P2 qui est comptée positivement puisque P2 est du côté des petits diamètres par rapport à P0,

$TT_{rep2}$ étant la valeur de report de la conicité femelle qui sera définie plus loin ; elle est inférieure à la valeur nominale de la conicité.

En variante, au lieu d'utiliser le bloc étalon de la figure 14 comportant un espace intérieur délimité par deux faces planes parallèles, on peut utiliser le bloc 80 en U de la figure 16 qui présente une surface d'extrémité transversale 82 et dont l'espace intérieur 81 est délimité par deux faces planes inclinées en coin, d'orientation sensiblement longitudinale, inclinées symétriquement par rapport à la surface d'extrémité 82 et convergeant vers le fond de l'espace intérieur 81, c'est-à-dire vers le fond du U. L'angle D entre les surfaces planes inclinées est égal à 2.arctg ($TT_{moy2}$ /2) et la distance transversale entre les faces planes inclinées à la distance longitudinale $L_B$ de la surface d'extrémité 82 est égale à ($D_{2e}$ -h). L'appareil de mesure 51 est inséré de manière à appliquer sa surface d'appui 54, 54' contre la surface d'extrémité 82 du bloc étalon 80 et ses surfaces de contact 60, 61 contre les faces planes inclinées du bloc 80. On n'a alors besoin que d'un bloc étalon 80 quelle que soit la longueur $L_B$.

En variante de la figure 16, l'angle D entre les surfaces planes inclinées est égal à 2.arctg. ($TT_{rep2}/2$) et la distance transversale entre les faces planes inclinées à la distance longitudinale ($L_B$ -L2) de la surface d'extrémité 82 est égale à ($D_{nom}$-h).

En variante non représentée de la figure 16, le bloc étalon 80 peut en outre comporter à l'extrémité de sa surface périphérique conique du côté de la surface d'extrémité 82 une partie non représentée à la figure 16 de conicité différente qui reproduit le profil de l'extrémité de l'élément femelle 2, notamment de la portée d'étanchéité 6 et éventuellement de la surface d'appui femelle 8. Un tel bloc étalon permet de régler un second appareil de mesure plan de diamètre 51 pour effectuer le contrôle du diamètre de la portée d'étanchéité 6.

On effectue la mesure de la même manière que dans le cas du filetage mâle en plaçant la surface d'appui 54, 54' contre la surface d'extrémité 10 du filetage femelle 4 à contrôler et en mettant les surfaces de contact 60, 61 intérieurement en contact avec les sommets de filets femelles diamétralement opposés.

On fait pivoter l'appareil autour de la surface de contact 61 qui pivote en restant en contact avec les sommets de filets.

La mesure du diamètre D2s entre sommets de filets correspond à la valeur maximale de la distance transversale entre les surfaces de contact 60, 61.

Comme pour le filetage mâle, cette valeur peut être lue sur le comparateur 55 ou directement affichée si l'on utilise des circuits électroniques appropriés décrits plus haut.

On peut comme dans le cas du filetage mâle utiliser un appareil de mesure plan de diamètre qui comporte trois surfaces de contact et qui donne la valeur de D2s sans avoir à faire pivoter l'appareil autour d'une de ses surfaces de contact.

Dans ce cas, on utilise le bloc d'étalon 80 de la figure 15 comportant une cavité cylindrique.

En variante, on utilise le bloc étalon 80 de la figure 17 comportant une surface transversale d'extrémité 82 et un espace intérieur 81 délimité par une surface périphérique conique de conicité égale à $TT_{moy2}$, dont le sommet est dirigé du côté opposé à la surface transversale d'extrémité et dont le diamètre à la distance $L_B$ de la surface transversale d'extrémité 82 est égal à ($D2_e$ -h). L'appareil de mesure 51 est inséré de manière à appliquer sa surface d'appui 54, 54' contre la surface d'extrémité 82 du bloc étalon 80 et ses surfaces de contact contre la surface périphérique conique du bloc étalon 80. On n'a alors besoin que d'un bloc étalon quelle que soit la longueur $L_B$ comme dans le cas de la figure 16.

En variante de la figure 17, la surface périphérique conique possède une conicité égale à $TT_{rep2}$ et son diamètre à la distance ($L_B$ -L2) de la surface transversale d'extrémité 82 est égal à ($D_{nom}$-h).

En variante non représentée de la figure 17, le bloc étalon 80 peut en outre comporter à l'extrémité de sa surface périphérique conique du côté de la surface d'extrémité 82 une partie non représentée à la figure 17 de conicité différente qui reproduit le profil du ou des moyens d'étanchéité de l'élément femelle 2, notamment de la portée d'étanchéité 6 et éventuellement de la surface d'appui femelle 8. Un tel bloc étalon permet de régler un second appareil de mesure plan de diamètre 51 pour effectuer le contrôle du diamètre de la portée d'étanchéité 6.

La mesure du diamètre D2s entre sommets de filets dans le plan de mesure P2 est effectuée de la même manière que la mesure du diamètre D1s sur le filetage mâle.

La dernière étape du procédé de contrôle du filetage femelle 4 est une comparaison entre la valeur D2s mesurée entre sommets de filets et les bornes admissibles définies par un intervalle autour de $D2_e$.

La valeur $D_2$ du diamètre primitif du filetage femelle 4 dans le plan de mesure $P_2$ s'obtient en ajoutant la quantité h précédemment définie à la valeur mesurée D2s.

Les bornes de l'intervalle admissible du diamètre mesuré entre sommets de filets D2s peuvent être définies directement à partir des bornes relatives au diamètre primitif D2, minorées de la quantité h.

Elles peuvent en outre être définies indirectement en remplaçant, dans la formule $D2_e = D_{nom}$ -L2.$TT_{rep2}$/100 donnant la valeur estimée du diamètre primitif dans le plan de mesure, la valeur de la distance L2 entre plans P0 et P2 par des valeurs $L2_{min}$, $L2_{max}$ qui l'encadrent à $\pm\Delta L2$.

On détermine $D2_e$ à partir des relations suivantes illustrées par la figure 19 en utilisant le même type de calculs que pour déterminer $D1_e$.

D'une façon générale, on a cherché à ce que la valeur moyenne des diamètres primitifs des filetages 4 contrôlés selon la présente méthode soit égale à la valeur moyenne des diamètres primitifs des filetages 4 contrôlés avec un tampon-calibre 21 selon la spécification API 5B , ceci dans le plan d'extrémité 27 de ce tampon-calibre 21 qui est positionné en moyenne sur le dernier filet femelle parfait.

Le point $G_2$ marque sur la figure 19 la valeur moyenne du diamètre primitif du filetage 4 dans le plan d'extrémité 27 du tampon-calibre qui est distant de Ls2 du plan de référence P0 et de Lf2 du plan 25 situé à l'autre extrémité du tampon-calibre.

On considérera que :

a) comme indiqué plus haut, les cônes primitifs des filetages réalisés pivotent autour d'un point situé à une extrémité ou à l'autre du filetage du tampon-calibre 21 vissé sur le filetage femelle 4 à contrôler selon que la conicité TT2 du filetage 4 contrôlé est inférieure ou supérieure à la conicité du filetage du tampon-calibre, laquelle est considérée comme égale à la valeur nominale de la conicité ;

b) la distribution des conicités des filetages réalisés suit une loi normale centrée sur la valeur moyenne $TT_{moy2}$ de la conicité, l'intervalle entre valeur maximale et valeur minimale des conicités ($TT_{max2}$ -$TT_{min2}$) étant égal à 6 fois l'écart-type σ2 de la distribution.

Il s'ensuit que si la conicité du filetage contrôlé est inférieure à la valeur nominale $TT_{nom}$, le point du filetage contrôlé dans le plan 27 d'extrémité du tampon-calibre est situé dans l'intervalle $0_2'A_2$, le point $0_2'$ correspondant à la conicité $TT_{nom}$ du tampon-calibre et le point $A_2$ correspondant à la valeur minimale $TT_{min2}$ de la conicité du filetage à contrôler. La densité de probabilité d'un point quelconque de l'intervalle $O_2'A_2$ correspond à une loi de Gauss centrée en $O_1$ illustrée par la partie en traits pleins de la courbe en cloche représentée à la figure 19, le point $O_1$ correspondant à la valeur moyenne $TT_{moy2}$ de la conicité du filetage 4 à contrôler.

Si la conicité TT2 du filetage contrôlé est inférieure à la valeur nominale $TT_{nom}$, l'extrémité du filetage contrôlé dans le plan d'extrémité 27 de la bague-calibre est le point pivot O'$_2$. La probabilité associée à la position du point O'$_2$ est égale à l'aire de la partie en pointillés de la courbe en cloche de la figure 19.

La valeur moyenne résultante de la position de l'extrémité du filetage dans le plan 27 est le centre de gravité G$_2$ des positions pour l'ensemble des valeurs de conicité entre TT$_{min2}$ et TT$_{max2}$ et permet de définir une valeur de report de la conicité TT$_{rep2}$ par la pente de la droite Q$_2$G$_2$, le point Q$_2$ correspondant à la valeur nominale du diamètre primitif.

On peut écrire sur un axe dirigé de A$_2$ vers O'$_2$ :

$$TT_{rep2} = TT_{nom} + O'_2G_2 / Ls2 = TT_{nom} + O'_2O_2/Ls2 + O_2G_2/Ls2$$

$$\frac{O'2O2}{Ls2} = \frac{Lf2}{Ls2}.\Delta TT2$$

Le rapport Lf2/Ls2 est encore égal au rapport K2 de la longueur du filetage mâle à la distance entre le plan de référence P0 et le dernier filet femelle parfait.

$$\frac{O2G2}{Lf2.\sigma2} = \int_{-\infty}^{+\infty} f(x).\rho(x).dx$$

x est une variable centrée réduite égale à (TT2 - T$_{Tmoy2}$)/ σ2 qui peut varier de - ∞ à + ∞, TT2 correspondant à la variable conicité.

$$f(x) \text{ est une fonction de Gauss} = \frac{1}{\sqrt{2\pi}}\exp(-x^2/2)$$

avec

$\rho(x) = x$      pour x < -ATT2 /σ2      soit pour TT2 < TT$_{nom}$
$\rho(x) = -\Delta TT2 /\sigma2$      pour $\times \geq -\Delta TT2 /\sigma2$      soit pour TT2 ≥ TT$_{nom}$

$$\frac{O2G2}{Lf2.\sigma2} = \frac{1}{\sqrt{2\pi}}\int_{-\infty}^{-\Delta TT2/\sigma2} x.\exp(-x^2/2).dx - \frac{\Delta TT2}{\sqrt{2\pi}.\sigma2}\int_{-\Delta TT2/\sigma2}^{+\infty}\exp(-x^2/2).dx$$

On peut alors facilement en déduire la formule :

$$TTrep2 = TTnom + K2 \cdot \Delta TT2 - \frac{K2 \cdot \sigma2}{\sqrt{2\pi}} \cdot \exp\left[-\frac{1}{2} \cdot (\Delta TT2 / \sigma2)^2\right]$$
$$-K2 \cdot \Delta TT2 \cdot g(\Delta TT2 / \sigma2)$$

Application numérique:

TT$_{nom}$ = 6.25 %      K2 = 2,22
TT$_{min2}$ = 6,05 %      TT$_{max2}$ = 6,45 %      TT$_{moy2}$ = 6,25 %
ΔTT2 = 0 %      σ2 = 0,07 %

$TT_{rep2}$ = 6,19 % et est comprise dans l'intervalle souhaité entre $TT_{min2}$ et $TT_{nom}$.

Il est avantageux pour les performances des filetages mâles ou femelles contrôlés par le procédé selon la présente invention que la valeur moyenne de $TT_{moy2}$ de la conicité du filetage femelle 4 soit inférieure à la valeur moyenne $TT_{moy1}$ de la conicité du filetage mâle 3, chacun des éléments mâle et femelle 1, 2 comportant des moyens d'étanchéité telle qu'une portée d'étanchéité 5, 6 qui interfère radialement sur celle de l'élément conjugué sur l'assemblage 100 et/ou une surface d'appui 7, 8 en butée avec celle de l'élément conjugué sur l'assemblage 100, les moyens d'étanchéité mâles 5, 7 étant disposés à proximité de l'extrémité libre de l'élément mâle 1.

Lorsque les valeurs moyennes des conicités sont ainsi démariées, les filetages ont tendance à peu interférer au voisinage du ou des moyens d'étanchéité. Or, les inventeurs ont pu montrer une influence favorable d'une faible interférence des filetages du côté des moyens d'étanchéité (5, 6, 7, 8) sur le niveau de pression de contact des moyens d'étanchéité.

La valeur moyenne $TT_{moy1}$ de la conicité du filetage mâle peut être supérieure à la valeur nominale $TT_{nom}$.

La valeur moyenne $TT_{moy2}$ de la conicité du filetage femelle peut être inférieure à la valeur nominale $TT_{nom}$.

Le tableau 1 suivant est issu de calculs numériques sur un assemblage de tubes de diamètre 177,8 mm (7 "), d'épaisseur 8,05 mm (23 lb/ft selon les désignations anglo-saxonnes en usage dans le métier) et de limite d'élasticité minimale (SMYS) égale à 551 MPa, l'assemblage étant semblable à celui de la figure 3. Il donne la valeur de la pression de contact au niveau des portées d'étanchéité 5, 6, calculée pour un couple de vissage de 9,8 kN.m.

Tableau 1 :

| pression de contact sur les portées d'étanchéité en fonction de l'interférence en filetage. | | | | | |
|---|---|---|---|---|---|
| | conicité (%) | | interférence filetage (mm) | | rapport pression |
| | mâle | femelle | côté premiers filets mâles | côté derniers filets mâles | de contact / SMYS |
| 1er cas | 6.00 % | 6.60 % | -0.48 mm | 0.19 mm | 0.74 |
| 2ème cas | 6.50 % | 6.10 % | 0.30 mm | -0.15 mm | 0.59 |

On constate l'effet néfaste d'une interférence diamétrale positive du côté de premiers filets mâles sur la valeur de la pression de contact au niveau des portées d'étanchéité 5, 6. Il apparaît donc judicieux de pouvoir estimer l'interférence diamétrale du côté entrée mâle et notamment dans le plan correspondant au dernier filet femelle parfait en prise avec le premier filet mâle parfait. Une mesure du diamètre primitif des filetages à cet endroit apparaît en conséquence avantageuse.

Mais, même en réalisant l'assemblage avec des valeurs moyennes démariées de conicité et en contrôlant le diamètre primitif relativement près des portées d'étanchéité par le procédé selon l'invention, il pourrait advenir pour certains couples d'éléments mâle/femelle acceptés par le procédé de contrôle selon l'invention que la valeur de l'interférence en filetage au voisinage des portées d'étanchéité 5, 6 soit supérieure à la valeur maximale de l'interférence en filetage au même endroit pour des filetages contrôlés par calibres massifs selon la spécification API 5B.

Ce point peut être vérifié par calcul géométrique.

Dans le cas des tubes donnés en exemple ci-avant, on trouve compte tenu des tolérances admissibles sur les conicités que la valeur maximale de l'interférence en filetage au voisinage des portées d'étanchéité dans le cas du procédé de contrôle selon l'invention est inférieure de 0,07 mm à la valeur maximale de l'interférence en filetage au même endroit pour des filetages contrôlés selon la spécification API 5B.

Un tel résultat est satisfaisant. Si tel n'était pas le cas, pour qu'il y ait stricte équivalence des procédés, il conviendrait, par exemple, de réduire l'intervalle de tolérance sur la conicité des filetages réalisés et contrôlés par le procédé selon l'invention .

Une dernière vérification à effectuer au regard de l'équivalence vis-à-vis du contrôle selon la spécification API 5B est l'équivalence des couples de vissage.

Le couple de vissage au moment de l'accostage des surfaces d'appui 7, 8 est essentiellement fonction de l'interférence globale sur l'ensemble des filetages.

Or, si la valeur de l'interférence filetage au voisinage des portées d'étanchéité 5, 6 est bien maîtrisée par l'utilisation du procédé selon l'invention, la valeur de l'interférence à l'autre extrémité du filetage, soit au niveau des filets mâles imparfaits, est par contre moins bien maîtrisée.

Les inventeurs ont de ce fait vérifié que le couple de vissage spécifié n'a pas à être modifié si la valeur de l'aire de l'interférence filetage, calculée pour des dimensions moyennes des éléments mâle/femelle 1, 2 et intégrant la valeur de l'interférence tout au long du filetage, est peu différente entre des filetages contrôlés par le procédé selon l'invention et des filetages contrôlés selon la spécification API 5B.

Dans le cas des tubes donnés en exemple ci-avant, la valeur de cette aire d'interférence est 2% plus faible pour le procédé selon l'invention par rapport au contrôle selon la spécification API 5B ; une telle différence est tout à fait acceptable.

Au cas où on trouverait une différence importante, supérieure à 30% par exemple dans un sens ou dans un autre, il conviendrait là encore, par exemple, de réduire les bornes de l'intervalle de tolérance sur les conicités des filetages.

La présente invention ne se limite pas aux modes de réalisation exposés dans les figures ou les exemples.

L'invention peut notamment s'appliquer au contrôle des filetages coniques d'assemblages dits intégraux, chaque tube étant de grande longueur et comportant un élément mâle 1 à une extrémité et un élément femelle 2 à l'autre extrémité, l'élément mâle d'un premier tube 101 étant assemblé à l'élément femelle d'un second tube 102.

Elle peut aussi s'appliquer au contrôle des filetages coniques d'assemblages manchonnés entre tubes de grande longueur comportant un élément mâle 1 à chacune de leurs extrémités, les manchons d'assemblage étant munis à chacune de leurs extrémités d'un élément femelle 2.

Elle peut aussi s'appliquer au contrôle de filetages coniques à filets de toutes sortes de forme, ronds, triangulaires, trapézoïdaux à flancs d'angle positifs ou négatifs et autres.

**Revendications**

1. Procédé de contrôle d'un filetage conique mâle (3) disposé sur la périphérie extérieure d'un élément mâle (1) lui-même situé en extrémité d'un tube métallique (101) et comprenant au moins un moyen d'étanchéité (5, 7) situé au voisinage de cette extrémité, dans lequel on contrôle le diamètre primitif (D1) du filetage dans un plan de mesure (P1) donné situé à la distance L1 du plan de référence (P0) du dessin au moyen d'un appareil de mesure plan de diamètre (51) qui comprend une surface d'appui (54, 54'), au moins deux surfaces de contact (60, 61) transversalement à distance l'une de l'autre et à distance axiale réglable de la surface d'appui et un moyen de mesure (55) du diamètre d'un cercle situé dans un plan transversal de mesure (P1) et tangent aux surfaces de contact, ledit procédé comprenant les étapes suivantes :

   a) ajustage sur l'appareil de mesure plan de diamètre (51) de la distance $L_A$ entre la surface d'appui (54, 54') et le plan de mesure (P1) en fonction de la distance L1 choisie,
   b) réglage dudit moyen de mesure sur une valeur préétablie de la distance transversale entre les surfaces de contact au moyen d'un bloc étalon (70) dont la cote caractéristique est définie par rapport à la valeur estimée ($D1_e$) du diamètre primitif dans le plan de mesure (P1),
   c) mesure dans le plan de mesure (P1) du diamètre du filetage entre sommets de filets (D1s), l'appareil de mesure (51) étant mis en butée par sa surface d'appui (54, 54') contre l'extrémité libre de l'élément mâle,
   d) comparaison du diamètre mesuré entre sommets de filets (D1s) par rapport aux bornes de l'intervalle admissible,

   et étant **caractérisé en ce que** le plan de mesure (P1) du diamètre primitif du filetage mâle (3) est un plan situé entre le plan de référence (P0) du dessin et le premier filet mâle parfait et **en ce que** la valeur estimée du diamètre primitif ($D1_e$) dans le plan de mesure (P1) répond aux équations suivantes :

   $$D1e = Dnom - L1 \cdot TTrep1/100$$

   $$TTrep1 = TTnom + K1 \cdot \Delta TT1 + \frac{K1 \cdot \sigma1}{\sqrt{2\pi}} \cdot \exp\left[-\frac{1}{2} \cdot (\Delta TT1/\sigma1)^2\right] - K1. \Delta TT1. g(-\Delta TT1/\sigma1)$$

   $D_{nom}$ étant la valeur nominale du diamètre primitif dans le plan de référence,
   $TT_{rep1}$ étant la valeur de report de la conicité mâle,
   $TT_{nom}$ étant la valeur nominale de la conicité du filetage,
   $TT_{min1}$, $TT_{max1}$, et $TT_{moy1}$ étant respectivement les valeurs minimale, maximale et moyenne de la conicité des filetages mâles réalisés,
   $\Delta TT1$ étant la valeur algébrique de l'écart ($TT_{moy1} - TT_{nom}$),
   $\sigma1$ étant l'écart-type de la distribution des valeurs de conicité réalisées,
   K1 étant le rapport de la longueur du filetage mâle à la distance entre le plan de référence (P0) et le premier filet mâle parfait,
g(u) étant la valeur de la loi normale centrée réduite pour la valeur u de la variable.

**2.** Procédé de contrôle suivant la revendication 1 **caractérisé en ce que** le plan de mesure (P1) est situé sensiblement à mi-distance entre le plan de référence (P0) et le plan correspondant au premier filet mâle parfait

**3.** Procédé de contrôle d'un filetage conique femelle (4) disposé sur la périphérie intérieure d'un élément femelle (2) lui-même situé en extrémité d'un tube métallique (102) et comprenant au moins un moyen d'étanchéité (6, 8) disposé de sorte à coopérer avec celui ou ceux (5, 7) situés au voisinage de l'extrémité libre de l'élément mâle, dans lequel on contrôle le diamètre primitif (D2) du filetage dans un plan de mesure (P2) donné situé à la distance L2 du plan de référence (P0) du dessin au moyen d'un appareil de mesure plan de diamètre (51) qui comprend une surface d'appui (54, 54'), au moins deux surfaces de contact (60, 61) transversalement à distance l'une de l'autre et à distance axiale réglable de ladite surface d'appui et un moyen de mesure (55) du diamètre d'un cercle situé dans un plan transversal de mesure (P2) et tangent auxdites surfaces de contact, ledit procédé comprenant les étapes suivantes :

a) ajustage sur l'appareil de mesure plan de diamètre (51) de la distance ($L_B$) entre la surface d'appui (54, 54') et le plan de mesure (P2) en fonction de la distance $L_2$ choisie,
b) réglage dudit moyen de mesure (55) sur une valeur préétablie de la distance transversale entre les surfaces de contact au moyen d'un bloc étalon (80) dont la cote caractéristique est définie par rapport à la valeur estimée ($D2_e$) du diamètre primitif dans le plan de mesure (P2) considéré,
c) mesure dans le plan de mesure (P2) du diamètre du filetage entre sommets de filets (D2s), l'appareil de mesure(51) étant mis en butée par sa surface d'appui (54, 54') contre l'extrémité libre de l'élément femelle,
d) comparaison du diamètre mesuré entre sommets de filets (D2s) par rapport aux bornes de l'intervalle admissible,

et **caractérisé en ce que** le plan de mesure (P2) du diamètre primitif du filetage conique femelle (4) est situé dans une zone de filets femelles parfaits et est le plus voisin du plan du dessin coïncidant avec le plan de mesure (P1) du diamètre primitif du filetage mâle défini par la revendication 1 ou 2 lorsque, sur le dessin, les deux filetages mâle et femelle (3, 4) sont assemblés et **en ce que** la valeur estimée du diamètre primitif ($D2_e$) du filetage femelle dans le plan de mesure (P2) répond aux équations suivantes :

$$D2e = Dnom - L2 \cdot TTrep2 / 100$$

$$TTrep2 = TTnom + K2 \cdot \Delta TT2 - \frac{K2 \cdot \sigma2}{\sqrt{2\pi}} \cdot \exp\left[-\frac{1}{2} \cdot (\Delta TT2 / \sigma2)^2\right] - K2 \cdot \Delta TT2 \cdot g(\Delta TT2 / \sigma2)$$

$D_{nom}$ étant la valeur nominale du diamètre primitif dans le plan de référence,
$TT_{rep2}$ étant la valeur de report de la conicité,
$TT_{nom}$ étant la valeur nominale de la conicité du filetage,
$TT_{min2}$, $TT_{max2}$, et $TT_{moy2}$ étant respectivement les valeurs minimale, maximale et moyenne de la conicité des filetages réalisés,
$\Delta TT2$ étant la valeur algébrique de l'écart ($TT_{moy2}$ -$TT_{nom}$).
$\sigma2$ étant l'écart-type de la distribution des valeurs de conicité réalisées,
K2 étant le rapport de la longueur du filetage femelle à la distance entre le plan de référence (P0) et le dernier filet femelle parfait,
g(u) étant la valeur de la loi normale centrée réduite pour la valeur u de la variable.

**4.** Procédé de contrôle selon l'une quelconque des revendications 1 à 3 **caractérisé en ce que** le ou les moyens d'étanchéité comprennent une portée d'étanchéité (5, 6).

**5.** Procédé de contrôle selon l'une quelconque des revendications 1 à 4 **caractérisé en ce que** le ou les moyens d'étanchéité comprennent une surface d'appui transversale (7, 8).

**6.** Procédé de contrôle d'un filetage conique femelle (4) selon la revendication 3, prise seule ou conjointement à la revendication 4 ou 5, **caractérisé en ce que** la valeur moyenne ($TT_{moy2}$) de la conicité du filetage femelle (4) est inférieure à la valeur moyenne ($TT_{moy1}$) de la conicité du filetage mâle (3) qui lui est associé.

**7.** Procédé de contrôle d'un filetage conique mâle (3) selon la revendication 1 ou 2, prise seule ou conjointement à la revendication 4 ou 5, **caractérisé en ce que** la valeur moyenne ($TT_{moy1}$) de la conicité du filetage mâle (3) est supérieure à la valeur nominale ($TT_{nom}$).

**8.** Procédé de contrôle d'un filetage conique femelle (4) selon la revendication 3, prise seule ou conjointement à la revendication 4 ou 5, **caractérisé en ce que** la valeur moyenne ($TT_{moy2}$) de la conicité du filetage femelle (4) est inférieure à la valeur nominale ($TT_{nom}$).

**9.** Procédé de contrôle selon l'une quelconque des revendications 1 à 8 **caractérisé en ce que** les valeurs des bornes de l'intervalle admissible du diamètre entre sommets de filets sont obtenues en remplaçant dans la formule donnant la valeur estimée du diamètre primitif dans le plan de mesure la valeur (L1, L2) de la distance entre plan de référence (P0) et plan de mesure (P1, P2) par des valeurs ($L1_{min}$, $L1_{max}$, $L2_{min}$, $L2_{max}$) qui encadrent celle-ci.

**10.** Procédé de contrôle selon l'une quelconque des revendications 1 à 9, **caractérisé en ce qu'**il est mis en oeuvre à l'aide d'un appareil de mesure plan de diamètre (51) qui comporte deux surfaces de contact (60, 61) quatre fois dans le même plan de mesure (P1, P2) en tournant l'appareil de mesure (51) ou le filetage (3, 4) d'un huitième de tour autour de l'axe du filetage (XX) entre chaque mesure et **en ce qu'**on utilise la valeur moyenne de ces quatre mesures pour caractériser le diamètre entre sommets de filets dans le plan de mesure.

**11.** Procédé de contrôle selon l'une quelconque des revendications 1 à 9, **caractérisé en ce qu'**il est mis en oeuvre à l'aide d'un appareil de mesure plan de diamètre (51) qui comporte trois surfaces de contact trois fois dans le même plan de mesure ($P_1$, P2) en tournant l'appareil de mesure (51) ou le filetage (3, 4) de 40° autour de l'axe du filetage (XX) entre chaque mesure et **en ce qu'**on utilise la valeur moyenne de ces trois mesures pour caractériser le diamètre entre sommets de filets dans le plan de mesure.

**12.** Appareil de mesure plan de diamètre (51) dans un plan de mesure (P1, P2) pour mettre en oeuvre le procédé de contrôle selon l'une quelconque des revendications 1 à 10, comprenant une surface d'appui (54, 54'), deux surfaces de contact (60, 61) transversalement à distance l'une de l'autre et à distance axiale réglable de la surface d'appui et un moyen de mesure (55) du diamètre d'un cercle situé dans un plan transversal de mesure (P1) et tangent aux surfaces de contact (60, 61), **caractérisé en ce qu'**il comprend un moyen pour acquérir automatiquement la valeur maximale du diamètre obtenue au cours de la mesure.

**13.** Appareil de mesure plan de diamètre (51) selon la revendication 12, **caractérisé en ce qu'**il comprend un moyen pour effectuer des calculs statistiques sur les valeurs acquises de diamètre entre sommets de filets.

**14.** Bloc étalon (70) utilisé pour ajuster la valeur préétablie de la distance entre les surfaces de contact (60, 61) dans le procédé de contrôle selon la revendication 1 ou 2 utilisant un appareil de mesure plan de diamètre à deux surfaces de contact, **caractérisé en ce que** le bloc (70) est en forme de coin tronqué et comprend une surface transversale d'extrémité (72) et deux faces planes d'orientation sensiblement longitudinale, inclinées symétriquement par rapport à la surface transversale d'extrémité et convergeant vers celle-ci, l'angle C entre lesdites faces planes inclinées étant égal à 2.arctg ($TT_{moy1}$ /2) et la distance transversale entre lesdites faces planes inclinées étant égale à ($D1_e$ +h) à la distance longitudinale ($L_A$) de la surface d'extrémité (72), h étant égal à la somme de la hauteur d'une dent (13) du filetage à contrôler (3) et d'un facteur de correction géométrique connu en soi et propre à l'appareil de mesure (51).

**15.** Bloc étalon (70) utilisé pour ajuster la valeur préétablie de la distance entre les surfaces de contact dans le procédé de contrôle selon l'une des revendications 1 ou 2 utilisant un appareil de mesure plan de diamètre à 3 surfaces de contact, **caractérisé en ce que** le bloc (70) est en forme de tronc de cône et comprend une surface transversale d'extrémité (72) du côté du sommet du cône et une surface périphérique conique de conicité égale à $TT_{moy1}$, le diamètre de la surface conique à la distance ($L_A$) de la surface transversale d'extrémité étant égal à ($D1_e$ +h), h étant égal à la somme de la hauteur d'une dent (13) du filetage à contrôler (3) et d'un facteur de correction géométrique connu en soi et propre à l'appareil de mesure (51).

**16.** Bloc étalon (70) selon la revendication 14 ou 15, **caractérisé en ce que** le bloc étalon comporte à l'extrémité de ses faces planes inclinées ou de sa surface périphérique conique du côté de la surface d'extrémité (72) une partie de pente ou de conicité différente qui reproduit le profil du ou des moyens d'étanchéité (5, 7) de l'élément mâle (1).

**17.** Bloc étalon (80) utilisé pour ajuster la valeur préétablie de la distance entre les deux surfaces de contact (60, 61) dans le procédé de contrôle selon la revendication 3 utilisant un appareil de mesure plan de diamètre à deux surfaces de contact, **caractérisé en ce que** le bloc (80) présente une surface d'extrémité transversale (82) et un espace intérieur (81) délimité par deux faces planes du bloc, d'orientation sensiblement longitudinale, inclinées symétriquement par rapport à ladite surface d'extrémité (82) et convergeant vers le fond de l'espace intérieur (81), l'angle D entre lesdites faces planes inclinées étant égal à $2.\text{arctg}\,(TT_{moy2}\,/2)$ et la distance transversale entre lesdites faces planes inclinées étant égale à $(D2_e\text{-h})$ à la distance longitudinale $(L_B)$ de la surface d'extrémité (82), h étant égal à la somme de la hauteur d'une dent du filetage à contrôler (4) et d'un facteur de correction géométrique connu en soi et propre à l'appareil de mesure (51).

**18.** Bloc étalon (80) utilisé pour ajuster la valeur préétablie de la distance entre les surfaces de contact dans le procédé de contrôle selon la revendication 3 utilisant un appareil de mesure plan de diamètre à trois surfaces de contact, **caractérisé en ce que** le bloc (80) présente une surface transversale d'extrémité (82) et un espace intérieur (81) délimité par une surface périphérique conique d'axe longitudinal et de conicité égale à $TT_{moy2.}$ dont le sommet est dirigé du côté opposé à la surface transversale d'extrémité et dont le diamètre à la distance $(L_B)$ de la surface transversale d'extrémité (82) est égal à $(D2_e\,\text{-h})$, h étant égal à la somme de la hauteur d'une dent du filetage à contrôler (4) et d'un facteur de correction géométrique connu en soi et propre à l'appareil de mesure (51).

**19.** Bloc étalon (80) selon la revendication 17 ou 18, **caractérisé en ce que** le bloc (80) comporte à l'extrémité de ses faces planes inclinées ou de sa surface périphérique conique du côté opposé à la surface d'extrémité transversale (82) une partie de pente ou de conicité différente qui reproduit le profil du ou des moyens d'étanchéité (6, 8) de l'élément femelle (2).

**Patentansprüche**

**1.** Verfahren zur Kontrolle eines konischen Außengewindes (3), das am äußeren Umfang eines Einführelements (1) angeordnet ist, welches sich am Ende eines Metallrohrs (101) befindet und mindestens ein Dichtungsmittel (5, 7) in der Nähe des Endes aufweist, bei dem der Flankendurchmesser (D1) des Gewindes in einer gegebenen Messebene (P1) im Abstand L1 von der Zeichenreferenzebene (P0) mittels eines Geräts zum Messen des Durchmessers in einer Ebene (51) kontrolliert wird, das eine Anlagefläche (54, 54'), mindestens zwei Kontaktflächen (60, 61), die quer voneinander beabstandet sind und sich in einstellbarem axialem Abstand von der Anlagefläche befinden, und ein Messmittel (55) des Durchmessers eines Kreises aufweist, der in einer quer verlaufenden Messebene (P1) tangierend zu den Kontaktflächen angeordnet ist, wobei das Verfahren die folgenden Schritte aufweist:

a) Justieren am Gerät zum Messen des Durchmessers in einer Ebene (51) des Abstands $(L_A)$ zwischen der Anlagefläche (54, 54') und der Messebene (P1) in Abhängigkeit vom gewählten Abstand L1,
b) Einstellen des Messmittels auf einen vorher festgelegten Wert des Querabstands zwischen den Kontaktflächen mittels eines Prüfmaß-Blocks (70), dessen charakteristisches Maß im Verhältnis zum geschätzten Wert $(D1_e)$ des Flankendurchmessers in der Messebene (P1) festgelegt wird,
c) Messen in der Messebene (P1) des Gewindedurchmessers zwischen Gewindescheiteln (D1s), wobei das Messgerät (51) mit seiner Anlagefläche (54, 54') am freien Ende des Einführelements in Anschlag gebracht wird,
d) Vergleichen des gemessenen Durchmessers zwischen Gewindescheiteln (D1 s) mit den Grenzen des zulässigen Intervalls,

und wobei das Verfahren **dadurch gekennzeichnet ist, dass** die Messebene (P1) des Flankendurchmessers des Außengewindes (3) eine Ebene zwischen der Zeichenreferenzebene (P0) und dem ersten vollkommenen Außengewinde ist und **dadurch**, dass der geschätzte Wert des Flankendurchmessers $(D1_e)$ den folgenden Gleichungen entspricht:

$$D1e = Dnom - L1 \cdot TTrep\,1/100$$

$$TTrep1 = TTnom + K1 \cdot \Delta TT1 + \frac{K1 \cdot \sigma1}{\sqrt{2\pi}} \cdot \exp\left[-\frac{1}{2} \cdot (\Delta TT1/\sigma1)^2\right] - K1 \cdot \Delta TT1 \cdot g(-\Delta TT1/\sigma1),$$

wobei $D_{nom}$ den nominalen Wert des Flankendurchmessers in der Referenzebene, $TT_{rep1}$ den Übertragswert der Konizität des Außengewindes, $TT_{nom}$ den nominalen Wert der Konizität des Gewindes, $TT_{min1}$, $TT_{max1}$ und $TT_{moy1}$ den minimalen, maximalen beziehungsweise mittleren Wert der Konizität der Außengewinde darstellen, wobei $\Delta TT1$ den algebraischen Wert der Abweichung ($TT_{moy1}$ - $TT_{nom}$), $\sigma1$ die Standardabweichung der Verteilung der Werte der Konizität, K1 das Verhältnis der Länge des Außengewindes zum Abstand zwischen der Referenzebene (P0) und dem ersten vollkommenen Außengewinde darstellen, wobei g(u) der Wert der reduzierten zentrierten Normalverteilung für den Wert u der Variable ist.

2. Kontrollverfahren nach Anspruch 1, **dadurch gekennzeichnet, dass** die Messebene (P1) im Wesentlichen in halbem Abstand zwischen der Referenzebene (P0) und der Ebene des ersten vollkommenen Außengewindes gelegen ist.

3. Verfahren zur Kontrolle eines konischen Innengewindes (4), das am inneren Umfang eines Aufnahmeelements (2) angeordnet ist, das sich am Ende eines Metallrohrs (102) befindet und mindestens ein Dichtungsmittel (6, 8) aufweist, das mit dem oder den Dichtungsmitteln (5, 7) in der Nähe des freien Endes des Einführelements zusammenwirkt, bei dem der Flankendurchmesser (D2) des Gewindes in einer gegebenen Messebene (P2) im Abstand L2 von der Zeichenreferenzebene (P0) mithilfe eines Geräts zum Messen des Durchmessers in einer Ebene (51) kontrolliert wird, das eine Anlagefläche (54, 54'), mindestens zwei Kontaktflächen (60, 61), die quer voneinander beabstandet sind und sich in einstellbarem axialem Abstand von der Anlagefläche befinden, und ein Messmittel (55) des Durchmessers eines Kreises in einer quer verlaufenden Messebene (P2) tangierend zu den Kontaktflächen aufweist,
wobei das Verfahren die folgenden Schritte umfasst:

a) Justieren am Gerät zum Messen des Durchmessers in einer Ebene (51) des Abstands ($L_A$) zwischen der Anlagefläche (54, 54') und der Messebene (P2) in Abhängigkeit vom gewählten Abstand L2,
b) Einstellen des Messmittels (55) auf einen vorher festgelegten Wert des Querabstands zwischen den Kontaktflächen mittels eines Prüfmaß-Blocks (80), dessen charakteristisches Maß im Verhältnis zum geschätzten Wert ($D2_e$) des Flankendurchmessers in der Messebene (P2) festgelegt wird,
c) Messen in der Messebene (P2) des Gewindedurchmessers zwischen Gewindescheiteln (D2s), wobei das Messgerät (51) mit seiner Anlagefläche (54, 54') am freien Ende des Aufnahmeelements in Anschlag gebracht wird,
d) Vergleichen des gemessenen Durchmessers zwischen Gewindescheiteln (D2s) mit den Grenzen des zulässigen Intervalls,

und wobei das Verfahren **dadurch gekennzeichnet ist, dass** die Messebene (P2) des Flankendurchmessers des konischen Innengewindes (4) in einem Bereich vollkommener Innengewinde angeordnet ist und sich am nächsten an der Zeichenebene befindet, die mit der Messebene (P1) des Flankendurchmessers des in Anspruch 1 oder 2 definierten Außengewindes zusammenfällt, wenn auf der Zeichenebene das Außen- und Innengewinde (3, 4) zusammengefügt sind, und **dadurch**, dass der geschätzte Wert des Flankendurchmessers ($D2_e$) des Innengewindes in der Messebene (P2) den folgenden Gleichungen entspricht:

$$D2e = Dnom - L2 \cdot TTrep2/100$$

$$TTrep2 = TTnom + K2 \cdot \Delta TT2 - \frac{K2 \cdot \sigma2}{\sqrt{2\pi}} \cdot \exp\left[-\frac{1}{2} \cdot (\Delta TT2/\sigma2)^2\right] - K2 \cdot \Delta TT2 \cdot g(\Delta TT2/\sigma2),$$

wobei $D_{nom}$ den nominalen Wert des Flankendurchmessers in der Referenzebene, $TT_{rep2}$ den Übertragswert der Konizität, $TT_{nom}$ den nominalen Wert der Konizität des Gewindes, $TT_{min2}$, $TTmax2$ und $TT_{moy2}$ den minimalen, maximalen beziehungsweise mittleren Wert der Konizität der Außengewinde darstellen, wobei $\Delta TT2$ den algebraischen Wert der Abweichung ($TT_{moy2}$ - $TT_{nom}$), $\sigma2$ die Standardabweichung der Verteilung der Werte der Konizität, K2 das Verhältnis der Länge des Innengewindes zum Abstand zwischen der Referenzebene (P0) und dem ersten vollkommenen Innengewinde darstellen, wobei g(u) der Wert der reduzierten zentrierten Normalverteilung für den Wert u der Variable ist.

4. Kontrollverfahren nach einem der Ansprüche 1 bis 3, **dadurch gekennzeichnet, dass** das oder die Dichtungsmittel eine Dichtungsfläche (5, 6) aufweisen.

5. Kontrollverfahren nach einem der Ansprüche 1 bis 4, **dadurch gekennzeichnet, dass** das oder die Dichtungsmittel eine quer verlaufende Anlagefläche (7, 8) aufweisen.

6. Verfahren zur Kontrolle eines konischen Innengewindes (4) nach Anspruch 3 für sich genommen oder zusammen mit Anspruch 4 oder 5, **dadurch gekennzeichnet, dass** der mittlere Wert ($TT_{moy2}$) der Konizität des Innengewindes (4) kleiner ist als der mittlere Wert ($TT_{moy1}$) der Konizität des ihm zugeordneten Außengewindes (3) .

7. Verfahren zur Kontrolle eines konischen Außengewindes (3) nach Anspruch 1 oder 2 für sich genommen oder zusammen mit Anspruch 4 oder 5, **dadurch gekennzeichnet, dass** der mittlere Wert ($TT_{moy1}$) der Konizität des Außengewindes (3) größer ist als der nominale Wert (TTnom).

8. Verfahren zur Kontrolle eines konischen Innengewindes (4) nach Anspruch 3, für sich genommen oder zusammen mit Anspruch 4 oder 5, **dadurch gekennzeichnet, dass** der mittlere Wert ($TT_{moy2}$) der Konizität des Innengewindes (4) kleiner ist als der nominale Wert ($TT_{nom}$).

9. Kontrollverfahren nach einem der Ansprüche 1 bis 8, **dadurch gekennzeichnet, dass** die Werte der Grenzen des zulässigen Intervalls für den Durchmesser zwischen Gewindescheiteln erhalten werden, indem in der Formel, die den geschätzten Wert des Flankendurchmessers in der Messebene angibt, der Wert (L1, L2) für den Abstand zwischen Referenzebene (P0) und Messebene (P1, P2) durch die Werte ($L1_{min}$, $L1_{max}$, $L2_{min}$, $L2_{max}$) ersetzt wird, die ihn einrahmen.

10. Kontrollverfahren nach einem der Ansprüche 1 bis 9, **dadurch gekennzeichnet, dass** es mithilfe eines Geräts zum Messen des Durchmessers in einer Ebene (51) mit zwei Kontaktflächen (60, 61) viermal in der gleichen Messebene (P1, P2) durchgeführt wird, indem das Messgerät (51) oder das Gewinde (3, 4) um eine achtel Drehung um die Gewindeachse (XX) zwischen jeder Messung gedreht werden, und **dadurch**, dass der mittlere Wert dieser vier Messungen verwendet wird, um den Durchmesser zwischen Gewindescheiteln in der Messebene zu charakterisieren.

11. Kontrollverfahren nach einem der Ansprüche 1 bis 9, **dadurch gekennzeichnet, dass** es mithilfe eines Geräts zum Messen des Durchmessers in einer Ebene (51) mit drei Kontaktflächen dreimal in der gleichen Messebene (P1, P2) durchgeführt wird, indem das Messgerät (51) oder das Gewinde (3, 4) um 40 Grad um die Gewindeachse (XX) zwischen jeder Messung gedreht werden, und **dadurch**, dass der mittlere Wert dieser drei Messungen verwendet wird, um den Durchmesser zwischen Gewindescheiteln in der Messebene zu charakterisieren.

12. Gerät zum Messen des Durchmessers in einer Ebene (51) für eine Messebene (P1, P2) zum Durchführen des Kontrollverfahrens nach einem der Ansprüche 1 bis 10 mit einer Anlagefläche (54, 54'), zwei Kontaktflächen (60, 61), die quer voneinander beabstandet sind und sich in einstellbarem axialem Abstand von der Anlagefläche befinden, und mit einem Messmittel (55) des Durchmessers eines Kreises in einer quer verlaufenden Messebene (P1) tangierend zu den Kontaktflächen (60, 61), **dadurch gekennzeichnet, dass** es ein Mittel zum automatischen Erfassen des während der Messung erhaltenen maximalen Werts für den Durchmesser aufweist.

13. Gerät zum Messen des Durchmessers in einer Ebene (51) nach Anspruch 12, **dadurch gekennzeichnet, dass** es ein Mittel zum Durchführen statistischer Berechnungen anhand der gewonnenen Durchmesserwerte zwischen Gewindescheiteln aufweist.

14. Prüfmaß-Block (70), der dazu verwendet wird, den vorher festgelegten Wert für den Abstand zwischen den Kontaktflächen (60, 61) im Kontrollverfahren nach Anspruch 1 oder 2 zu justieren, bei dem ein Gerät zum Messen des Durchmessers in einer Ebene mit zwei Kontaktflächen verwendet wird, **dadurch gekennzeichnet, dass** der Block (70) die Form eines schrägen Keils hat und eine quer verlaufende Endfläche (72) und zwei ebene, im Wesentlichen längs ausgerichtete Seiten aufweist, die gegenüber der quer verlaufenden Endfläche symmetrisch geneigt sind und zu dieser konvergieren, wobei der Winkel C zwischen den geneigten ebenen Flächen 2.arctg ($TT_{moy1}$/2) und der Querabstand zwischen den geneigten ebenen Flächen ($D1_e$ + h) im Längsabstand ($L_A$) der Endfläche (72) entsprechen, wobei h der Summe der Höhe eines Zahns (13) des zu kontrollierenden Gewindes (3) und einem an sich bekannten und dem Messgerät (51) eigenen geometrischen Korrekturfaktor entspricht.

15. Prüfmaß-Block (70) zum Einstellen des vorher festgelegten Wertes für den Abstand zwischen den Kontaktflächen im Kontrollverfahren nach einem der Ansprüche 1 oder 2, das ein Gerät zum Messen des Durchmessers in einer Ebene mit drei Kontaktflächen verwendet, **dadurch gekennzeichnet, dass** der Block (70) die Form eines schrägen Keils hat und eine quer verlaufende Endfläche (72) auf der Seite der Spitze des Kegels und eine konische peripherische Fläche aufweist, deren Konizität $TT_{moy1}$ entspricht, wobei der Durchmesser der konischen Fläche im Abstand ($L_A$) der quer verlaufenden Endfläche ($D1_e$ + h) entspricht, wobei h der Summe der Höhe eines Zahns (13) des zu kontrollierenden Gewindes (3) und einem an sich bekannten und dem Messgerät (51) eigenen geometrischen Korrekturfaktor entspricht.

16. Prüfmaß-Block (70) nach Anspruch 14 oder 15, **dadurch gekennzeichnet, dass** er am Ende seiner geneigten ebenen Flächen oder seiner konischen Peripherie auf der Seite der Endfläche (72) einen Abschnitt unterschiedlicher Neigung oder Konizität aufweist, der das Profil des oder der Dichtungsmittel (5, 7) des Einführelements (1) wiedergibt.

17. Prüfmaß-Block (80) zum Einstellen des vorher festgelegten Werts für den Abstand zwischen den beiden Kontaktflächen (60, 61) im Kontrollverfahren nach Anspruch 3, das ein Gerät zum Messen des Durchmessers in einer Ebene mit zwei Kontaktflächen verwendet, **dadurch gekennzeichnet, dass** der Block (80) eine quer verlaufende Endfläche (82) und einen Innenraum (81) aufweist, der von zwei ebenen Flächen des Blocks festgelegt wird, die im Wesentlichen längs ausgerichtet und gegenüber der Endfläche (82) geneigt sind und zum Boden des Innenraums (81) hin konvergieren, wobei der Winkel D zwischen den geneigten ebenen Flächen 2.arctg ($TT_{moy2}$/2) und der Querabstand zwischen den geneigten ebenen Flächen ($D2_e$ - h) im Längsabstand ($L_B$) der Endfläche (82) entsprechen, wobei h der Summe der Höhe eines Zahns des zu kontrollierenden Gewindes (4) und einem an sich bekannten und dem Messgerät (51) eigenen geometrischen Korrekturfaktor entspricht.

18. Prüfmaß-Block (80) zum Einstellen des vorher festgelegten Werts für den Abstand zwischen den Kontaktflächen im Kontrollverfahren nach Anspruch 3, das ein Gerät zum Messen des Durchmessers in einer Ebene mit drei Kontaktflächen verwendet, **dadurch gekennzeichnet, dass** der Block (80) eine quer verlaufende Endfläche (82) und einen Innenraum (81) aufweist, der von einer konischen peripherischen Fläche mit Längsachse und Konizität gleich $TT_{moy2}$ festgelegt wird, deren Spitze zu der Seite zeigt, die der quer verlaufenden Endfläche gegenüberliegt und deren Durchmesser im Abstand ($L_B$) der quer verlaufenden Endfläche (82) ($D2_e$ - h) entspricht, wobei h der Summe der Höhe eines Zahns des zu kontrollierenden Gewindes (4) und einem an sich bekannten und dem Messgerät (51) eigenen geometrischen Korrekturfaktor entspricht.

19. Prüfmaß-Block (80) nach Anspruch 17 oder 18, **dadurch gekennzeichnet, dass** der Block (80) am Ende seiner geneigten ebenen Flächen oder seiner konischen peripherischen Fläche auf der Seite, die der quer verlaufenden Endfläche (82) gegenüberliegt, einen Abschnitt unterschiedlicher Neigung oder Konizität aufweist, der das Profil des oder der Dichtungsmittel (6, 8) des Aufnahmeelements (2) wiedergibt.

**Claims**

1. A method for inspecting a male tapered thread (3) located on the external periphery of a male element (1) itself located at the end of a metal pipe (101) and comprising at least one sealing means (5, 7) located close to this end, in which the pitch diameter ($D_1$) of the thread is inspected in a given measuring plane ($P_1$) located at a distance $L_1$ from the reference plane ($P_0$) of the drawing using a plane diameter measuring device (51) which comprises a bearing surface (54, 54'), at least two contact surfaces (60, 61) at a transverse distance from each other and at an adjustable axial distance from the bearing surface and a means (55) for measuring the diameter of a circle located in a transverse measuring plane ($P_1$) tangential to the contact surfaces, said method comprising the following steps:

a) on the plane diameter measuring device (51), adjusting the distance $L_A$ between the bearing surface (54, 54') and the measuring plane ($P_1$) as a function of the distance $L_1$ selected;
b) adjusting said measuring means to a pre-determined value for the transverse distance between the contact surfaces using a setting block (70) the characteristic dimension of which is defined with respect to the estimated

value ($D_{1e}$) of the pitch diameter in the measuring plane ($P_1$);
c) measuring, in the measuring plane ($P_1$), the diameter of the thread between the thread crests ($D_{1s}$), the bearing surface (54, 54') of the measuring device (51) being abutted against the free end of the male element;
d) comparing the measured diameter between the thread crests ($D_{1s}$) with the admissible limits of the range;

and being **characterized in that** the measuring plane ($P_1$) of the pitch diameter of the male thread (3) is a plane located between the reference plane ($P_0$) of the drawing and the first perfect male thread and **in that** the estimated value of the pitch diameter ($D_{1e}$) in the measuring plane ($P_1$) satisfies the following equations:

$$D1e = Dnom - L1 \cdot TTrep1 \, / \, 100$$

$$TTrep1 = TTnom + K1 \cdot \Delta TT1 + \frac{K1 \cdot \sigma1}{\sqrt{2\pi}} \cdot \exp\left[ -\frac{1}{2} \cdot (\Delta TT1 / \sigma1)^2 \right]$$
$$- K1. \Delta TT1. g(-\Delta TT1 / \sigma1)$$

$D_{nom}$ is the nominal value of the pitch diameter in the reference plane;
$TT_{rep}$ is the plot value for the male taper;
$TT_{nom}$ is the nominal value of the taper of the thread;
$TT_{min1}$, $TT_{max1}$ and $TT_{av1}$ are respectively the minimum, maximum and mean values of the taper of the threads produced;
$\Delta TT_1$ is the algebraic value of the difference ($TT_{av1} - TT_{nom}$);
$\sigma_1$ is the standard deviation of the distribution of the taper values produced;
$K_1$ is the ratio of the length of the male thread to the distance between the reference plane ($P_0$) and the first perfect male thread;
g(u) is the value of the reduced centred normal distribution for the value u of the variable.

2. An inspection method according to claim 1, **characterized in that** the measuring plane ($P_1$) is located substantially half way between the reference plane ($P_0$) and the plane corresponding to the first perfect male thread.

3. A method for inspecting a female tapered thread (4) located on the internal periphery of a female element (2) itself located at the end of a metal pipe (102) and comprising at least one sealing means (6, 8) located so as to co-operate with that/those (5, 7) located close to the free end of the male element, in which the pitch diameter ($D_2$) of the thread is inspected in a given measuring plane ($P_2$) located at a distance $L_2$ from the reference plane ($P_0$) of the drawing using a plane diameter measuring device (51) which comprises a bearing surface (54, 54'), at least two contact surfaces (60, 61) at a transverse distance from each other and at an adjustable axial distance from said bearing surface and a means (55) for measuring the diameter of a circle located in a transverse measuring plane ($P_2$) tangential to the contact surfaces, said method comprising the following steps:

a) on the plane diameter measuring device (51), adjusting the distance $L_B$ between the bearing surface (54, 54') and the measuring plane ($P_2$) as a function of the distance $L_2$ selected;
b) adjusting said measuring means (55) to a pre-determined value for the transverse distance between the contact surfaces using a setting block (80) the characteristic dimension of which is defined with respect to the estimated value ($D_{2e}$) of the pitch diameter in the considered measuring plane ($P_2$);
c) measuring, in the measuring plane ($P_2$), the diameter of the thread between the thread crests ($D_{2s}$), the bearing surface (54, 54') of the measuring device (51) being abutted against the free end of the female element;
d) comparing the measured diameter between the thread crests ($D_{2s}$) with the admissible limits of the range;

and being **characterized in that** the measuring plane ($P_2$) of the pitch diameter of the female tapered thread (4) is located in a zone of perfect female threads and is the closest to the plane of the drawing coinciding with the measuring plane ($P_1$) of the pitch diameter of the male thread defined in claim 1 or claim 2 when, on the drawing, the two male and female threads (3, 4) are connected and **in that** the estimated value of the pitch diameter ($D_{2e}$) in the measuring plane ($P_2$) satisfies the following equations:

$$D2e = Dnom - L2 \cdot TTrep2 / 100$$

$$TTrep2 = TTnom + K2 \cdot \Delta TT2 - \frac{K2 \cdot \sigma2}{\sqrt{2\pi}} \cdot \exp\left[-\frac{1}{2} \cdot (\Delta TT2 / \sigma2)^2\right]$$
$$- K2 \cdot \Delta TT2 \cdot g(\Delta TT2 / \sigma2)$$

$D_{nom}$ is the nominal value of the pitch diameter in the reference plane;

$TT_{rep2}$ is the plot value of the taper;

$TT_{nom}$ is the nominal value of the taper of the thread;

$TT_{min2}$, $TT_{max2}$ and $TT_{av2}$ are respectively the minimum, maximum and mean values of the taper of the threads produced;

$\Delta TT_2$ is the algebraic value of the difference ($TT_{av2}$ - $TT_{nom}$);

$\sigma_2$ is the standard deviation of the distribution of the taper values produced;

$K_2$ is the ratio of the length of the female thread to the distance between the reference plane ($P_0$) and the last perfect female thread;

g(u) is the value of the reduced centred normal distribution for the value u of the variable.

4. An inspection method according to any one of claims 1 to 3, **characterized in that** said at least one sealing means comprises a sealing surface (5, 6).

5. An inspection method according to any one of claims 1 to 4, **characterized in that** said at least one sealing means comprises a transverse bearing surface (7, 8).

6. A method for inspecting a female tapered thread (4) according to claim 3, taken alone or with claim 4 or claim 5, **characterized in that** the mean value ($TT_{av2}$) of the taper of the female thread (4) is less than the mean value ($TT_{av1}$) of the taper of the male thread (3) associated therewith.

7. A method for inspecting a male tapered thread (3) according to claim 1 or claim 2, taken alone or with claim 4 or claim 5, **characterized in that** the mean value ($TT_{av1}$) of the taper of the male thread (3) is higher than the nominal value ($TT_{nom}$).

8. A method for inspecting a female tapered thread (4) according to claim 3, taken alone or with claim 4 or claim 5, **characterized in that** the mean value ($TT_{av2}$) of the taper of the female thread (4) is lower than the nominal value ($TT_{nom}$).

9. An inspection method according to any one of claims 1 to 8, **characterized in that** the values of the limits for the admissible range for the diameter between the thread crests are obtained by replacing, in the formula giving the estimated value of the pitch diameter in the measuring plane, the value ($L_1$, $L_2$) of the distance between the reference plane ($P_0$) and the measuring plane ($P_1$, $P_2$) by the values ($L_{1min}$, $L_{1max}$, $L_{2min}$, $L_{2max}$) which encompass it.

10. An inspection method according to any one of claims 1 to 9, **characterized in that** it is carried out using a plane diameter measuring device (51) which comprises two contact surfaces (60, 61), four times in the same measuring plane ($P_1$, $P_2$) by turning the measuring device (51) or the thread (3, 4) by an eighth of a turn about the axis of the thread (XX) between each measurement and **in that** the mean value of these four measurements is used to characterize the diameter between the crests of the threads in the measuring plane.

11. An inspection method according to any one of claims 1 to 9, **characterized in that** it is carried out using a plane diameter measuring device (51) which comprises three contact surfaces, three times in the same measuring plane ($P_1$, $P_2$) by turning the measuring device (51) or the thread (3, 4) by 40° about the axis of the thread (XX) between each measurement and **in that** the mean value of these three measurements is used to characterize the diameter between the crests of the threads in the measuring plane.

12. A plane diameter measuring device (51) in a measuring plane ($P_1$, $P_2$) for carrying out the inspection method according to any one of claims 1 to 10, comprising a bearing surface (54, 54'), two contact surfaces (60, 61) at a transverse distance from each other and at an adjustable axial distance from said bearing surface and a means (55) for measuring the diameter of a circle located in a transverse measuring plane ($P_1$) and tangential to the contact surfaces (60, 61), **characterized in that** it comprises a means for automatic acquisition of the maximum value of the diameter obtained during measurement.

13. A plane diameter measuring device (51) according to claim 12, **characterized in that** it comprises a means for carrying out statistical calculations on the values acquired for the diameter between the thread crests.

14. A setting block (70) used to adjust the pre-determined value of the distance between the contact surfaces (60, 61) in the inspection method according to claim 1 or claim 2, using a plane diameter measuring device with two contact surfaces, **characterized in that** the block (70) is in the form of a truncated wedge and comprises a transverse end surface (72) and two substantially longitudinally orientated flat faces, inclined symmetrically with respect to the transverse end surface and converging towards the latter, the angle C between said flat faces being equal to 2.arctan ($TT_{av1}/2$) and the transverse distance between said inclined flat faces being equal to ($D_{1e} + h$) at the longitudinal distance ($L_A$) from the end surface (72), h being equal to the sum of the height of one tooth (13) of the thread to be inspected (3) and a geometrical correction factor known in itself and peculiar to the measuring device (51).

15. A setting block (70) used to adjust the pre-determined value of the distance between the contact surfaces in the inspection method according to claim 1 or claim 2, using a plane diameter measuring device with three contact surfaces, **characterized in that** the block (70) is in the form of a truncated cone and comprises a transverse end surface (72) on the vertex side of the cone and a tapered peripheral surface with a taper equal to $TT_{av1}$, the diameter of the tapered surface at the distance ($L_A$) from the transverse end surface being equal to ($D_{1e} + h$), h being equal to the sum of the height of one tooth (13) of the thread to be inspected (3) and a geometrical correction factor known in itself and peculiar to the measuring device (51).

16. A setting block (70) according to claim 14 or claim 15, **characterized in that** the setting block comprises, at the end of its inclined flat faces or of its tapered peripheral surface on the end surface (72) side, a portion with a different slope or taper which reproduces the profile of said at least one sealing means (5, 7) of the male element (1).

17. A setting block (80) used to adjust the pre-determined value of the distance between the two contact surfaces (60, 61) in the inspection method according to claim 3, using a plane diameter measuring device with two contact surfaces, **characterized in that** the block (80) has a transverse end surface (82) and an internal space (81) delimited by two flat surfaces of the block, with a substantially longitudinal orientation, symmetrically inclined with respect to said end surface (82) and converging towards the back of the internal space (81), the angle D between said inclined flat faces being equal to 2.arctan($TT_{av2}/2$) and the transverse distance between said inclined flat faces being equal to ($D_{2e} - h$) at the longitudinal distance ($L_B$) from the end surface (82), h being equal to the sum of the height of one tooth of the thread to be inspected (4) and a geometrical correction factor known in itself and peculiar to the measuring device (51).

18. A setting block (80) used to adjust the pre-determined value of the distance between the contact surfaces in the inspection method according to claim 3, using a plane diameter measuring device with three contact surfaces, **characterized in that** the block (80) has a transverse end surface (82) and an internal space (81) delimited by a tapered peripheral surface with a longitudinal axis and with a taper equal to $TT_{av2}$, the vertex of which is directed to the side opposite to the transverse end surface and in which the diameter at the distance ($L_B$) from the transverse end surface (82) is equal to ($D_{2e} - h$), h being equal to the sum of the height of a tooth of the thread to be inspected (4) and a geometrical correction factor known in itself and peculiar to the measuring device (51).

19. A setting block (80) according to claim 17 or claim 18, **characterized in that** the block (80) comprises, at the end of its inclined flat faces or of its tapered peripheral surface on the side opposite to the transverse end surface (82), a portion with a different slope or taper which reproduces the profile of said at least one sealing means (6, 8) of the female element (2).

Fig 1

Fig 2

Fig 3

27

Fig 4

Fig 5

Fig 8

Fig 6

Fig 7

Fig 9

Fig 10    Fig 11    Fig 12    Fig 13

Fig 14    Fig 15    Fig 16    Fig 17

Fig 18

Fig 19